# EUROPÄISCHE PATENTSCHRIFT

(11) **EP 0 710 518 B1**
(45) Veröffentlichungstag und Bekanntmachung des Hinweises auf die Patenterteilung: **17.01.2001**
(21) Anmeldenummer: 95105379.2
(22) Anmeldetag: 10.04.1995
(51) Int. Cl.: B23B 31/12

(54) **Bohrfutter**
Drill chuck
Mandrin porte-foret

(30) Priorität: 31.10.1994 DE 4438991
(43) Veröffentlichungstag der Anmeldung: 08.05.1996
(60) Teilanmeldung: 00113207.5
(73) Patentinhaber: Röhm, Günter Horst, D-89567 Sontheim (DE)
(72) Erfinder: Röhm, Günter Horst, D-89567 Sontheim (DE)
(74) Vertreter: Fay, Hermann, Dipl.-Phys. Dr.

(56) Entgegenhaltungen:
- EP-A- 0 017 748
- DE-A- 2 341 642

## Beschreibung

Die Erfindung betrifft ein Bohrfutter, insbesondere zum Schlagbohren, mit einem an eine Bohrspindel anschließbaren Futterkörper, mit zwischen sich eine Aufnahme für das Bohrwerkzeug bildenden Spannbacken, die zum Öffnen und Schließen des Bohrfutters durch einen am Futterkörper drehbar und axial unverschiebbar geführten Spannring verstellbar sind, ferner mit einer Sperreinrichtung für den Spannring, bestehend aus einem koaxialen Kranz von Sperrausnehmungen und aus mindestens einem Sperrglied, das unter der Kraft einer Sperrfeder in die Sperrausnehmungen eingerückt ist, wobei das Sperrglied und die Sperrausnehmungen einander in derart geneigten Flankenflächen anliegen, daß diese den Spannring in der dem Öffnen des Bohrfutters entsprechenden Drehrichtung gegen Verdrehen sperren, beim Verdrehen des Spannrings in der entgegen gesetzten, also dem Schließen des Bohrfutters entsprechenden Drehrichtung aber das Sperrglied gegen die Kraft der Sperrfeder aus den Sperrausnehmungen herausdrücken und dadurch von Sperrausnehmung zu Sperrausnehmung verrutschen lassen, weiter mit einem zwischen Anschlägen begrenzt verdrehbaren koaxialen Stellring, durch dessen Verdrehen das Sperrglied zwischen dem an den Sperrausnehmungen eingerückten Zustand und einem aus den Sperrausnehmugen ausgerückten Zustand verstellbar ist, und mit einer in Umfangsrichtung zwei Raststellungen für den Stellring bildenden Rasteinrichtung, wobei sich das Sperrglied in der einen Raststellung in dem an den Sperrausnehmungen eingerückten Zustand, in der anderen Raststellung im ausgerückten Zustand befindet und die Raststellungen durch den Eingriff eines von der Kraft einer Rastfeder beaufschlagten Rastglieds in entsprechend angeordnete Rastaufnahmen gebildet sind.

Bohrfutter dieser Art sind für nur von Hand spannbare Bohrfutter aus DE 43 13 742 C1 oder für selbstspannende Futter aus DE 23 41 642 A1 bekannt.

Im Fall nur von Hand spannbarer Bohrfutter sind die Spannbacken im Futterkörper geführt und stehen über eine Backenverzahnung mit einem Spanngewinde am Spannring im Eingriff. Bei selbstspannenden Bohrfuttern sind dagegen die Spannbacken am Spannring geführt und axial an einem in Richtung um die Futterachse mit den Spannbacken drehschlüssigen Spannkopf gehalten, der in einem im Futterkörper vorgesehenen Spanngewinde verdrehbar ist. In beiden Fällen begrenzen die Anschläge die Verdrehbarkeit des Stellrings gegenüber dem Futterkörper und die Sperreinrichtung ist zwischen dem Spannring und einem Schleppring wirksam, wobei sich der Kranz der Sperrausnehmungen am Spannring und das Sperrglied am Schleppring befinden, der unter der Kraft einer Nachstellfeder steht und dessen Verdrehung relativ zum Futterkörper auf einen für die Nachstellung der Spannbacken zugelassenen Drehweg begrenzt ist. Die Rasteinrichtung ist ebenfalls zwischen dem Stellring und dem Schleppring ausgebildet. Sie dient dazu, bei offenem Bohrfutter die gegenseitige Drehmitnahme von Stellring und Schleppring zu sichern und bei geschlossenem Bohrfutter auszuschließen, daß sich im Bohrbetrieb der Stellring selbsttätig gegenüber dem Schleppring verstellt. Wird der Stellring relativ zum Schleppring in der dem Schließen des Bohrfutters entsprechenden Drehrichtung des Spannrings verdreht, verstellt sich das Sperrglied aus dem an den Sperrausnehmungen eingerückten Zustand in den ausgerückten Zustand, und umgekehrt.

Im Ergebnis bedarf ein solches Bohrfutter zum Spannen oder Lösen der Betätigung sowohl des Spannrings als auch des Stellrings, also der Handhabung mit zwei Händen.

Der Erfindung liegt die Aufgabe zugrunde, ein Bohrfutter der eingangs genannten Art auf möglichst einfache Weise so auszubilden, daß es zum Spannen und Lösen nur noch an einem einzigen Teil und damit nur noch mit einer einzigen Hand betätigt zu werden braucht.

Diese Aufgabe wird bei einem Bohrfutter mit den eingangs genannten Merkmalen nach der Erfindung dadurch gelöst, daß die Anschläge für den Stellring dessen Verdrehung in beiden Drehrichtungen gegenüber dem Spannring begrenzen, daß der Kranz der Sperrausnehmungen am Futterkörper und das Sperrglied am Spannring angeordnet und zur Steuerung des Sperrglieds eine Steuerkurve am Stellring ausgebildet ist, wobei durch Verdrehen des Stellrings relativ zum Spannring in dessen dem Schließen des Bohrfutters entsprechenden Drehrichtung das Sperrglied sich aus dem ausgerückten Zustand in den eingerückten Zustand verstellt und umgekehrt, daß ferner das Rastglied am Spannring und die Rastaufnahmen am Stellring vorgesehen sind, und daß die Sperrfeder und die Rastfeder gemeinsam von einem Federbügel gebildet sind, der sich in Umfangsrichtung längs des Spannrings erstreckt und drehschlüssig mit ihm verbunden ist.

Bei dem erfindungsgemäßen Bohrfutter dient der Stellring sowohl zur Verstellung des Sperrglieds als auch zur Verdrehung des Spannrings beim Verstellen der Spannbacken, wobei ersteres entlang dem Drehweg erfolgt, um den der Stellring gegenüber dem Spannring zwischen den Anschlägen verdrehbar ist. Die Rasteinrichtung hat dabei den Zweck, selbstätige und ungewünschte Drehungen des Stellrings gegenüber dem Spannring zu verhindern, insbesondere sicher zu stellen, daß bei offenem Bohrfutter der Spannring vom Stellring beim Verdrehen mitgenommen wird, ohne daß das Sperrglied in den eingerückten Zustand verstellt wird, bzw. bei gespanntem Futter sich der Stellring gegenüber dem Spannring nicht so verdrehen kann, daß das Sperrglied in den ausgerückten Zustand übergeht. Die Betätigung des erfindungsgemäßen Bohrfutters ist allein durch den Stellring möglich, der nur verdreht zu werden und sogar nur noch allein für die Hand zugänglich zu sein braucht, um das Bohrfutter zu schließen, zu spannen und zu sperren, bzw. zu entsperren, zu lösen und zu öffnen, was die Handhabung im Vergleich zu den bekannten Bohrfuttern wesentlich vereinfacht, vor allem dann, wenn das Spannen und Lösen des Bohrfutters mit Hilfe des Bohrmaschinenantriebs über die Bohrspindel erfolgen soll und dabei nur eine Hand zum Halten des Stellrings frei ist. Durch die Ausbildung des Federbügels sowohl als Sperrfeder als auch als Rastfeder ergibt sich ein herstellungs- wie fertigungstechnisch sehr einfacher und vorteilhafter Aufbau des erfindungsgemäßen Bohrfutters.

Ist der Spannring bei im Futterkörper geführten Spannbacken mit einem an den Spannbacken im Eingriff stehenden Spanngewinde versehen, wie es bei nur von Hand spannbaren Bohrfuttern der Fall ist, ist eine bevorzugte Ausführungsform der Erfindung dadurch gekennzeichnet, daß der Spannring einen koaxialen Zwischenring aufweist, der die spannringseitigen Teile der Anschläge für den Stellring und den Federbügel trägt und ein Kragenteil aufweist, der den das Spanngewinde tragenden Teil des Spannrings drehfest umschließt. Dabei kann auf sehr einfache Weise die an sich bekannte, aus herstellungs- und montagetechnischen Gründen besonders vorteilhafte Möglichkeit verwirklicht werden, daß der das Spanngewinde tragende Teil des Spannrings aus zwei Ringhälften besteht, die durch den Kragenteil am Futterkörper zusammengehalten sind.

Die die Verdrehung des Stellrings gegenüber dem Spannring begrenzenden Anschläge können auf verschiedene Weise verwirklicht werden. In einer ersten sehr vorteilhaften Ausführungsform ist am Spannring oder am Stellring mindestens eine achsenparallele Planfläche vorgesehen, der am jeweils anderen Ring je zwei achsenparallele und zueinander schräge Anschlagflächen gegenüberstehen, die durch ihre gegenseitige Schrägstellung den Winkel bestimmen, um den der Stellring gegenüber dem Spannring maximal verdrehbar ist. Diese Ausbildung der Anschläge empfiehlt sich vor allem bei selbstspannenden Bohrfuttern. Bei nur von Hand spannbaren Bohrfuttern dagegen empfiehlt sich zur Ausbildung der Anschläge eine andere Ausführungsform, wonach mindestens ein Anschlagstück am Stellring oder Spannring und eine das Anschlagstück aufnehmende Aussparung am jeweils anderen Ring vorgesehen ist und das Anschlagstück an den Enden des Drehweges jeweils mit einer der die Aussparung in Umfangsrichtung begrenzenden beiden Stirnflächen zum Anschlag kommt. Zweckmäßig ist das Anschlagstück als Wandstück des Zwischenrings ausgebildet, das vom axial vorderen Rand des Zwischenrings axial nach vorn in die auf der Wandinnenseite des Stellrings ausgebildete Aussparung vorsteht. Eine andere vorteilhafte Ausführungsmöglichkeit ist dadurch gekennzeichnet, daß das Anschlagstück als radial einwärts gerichteter Nocken an der Wandinnenseite des Stellrings und die Aussparung als Fenster in einem sich axial nach vorn etwa konisch verjüngenden Kragen des Zwischenrings ausgebildet ist.

Der Federbügel bildet vorzugsweise einen sich in Umfangsrichtung erstreckenden Federarm, der am freien Armende das Sperrglied aufweist, wobei der Federarm im eingerückten Zustand des Sperrglieds der Steuerkurve in einem Abstand vom Sperrglied anliegt, der das Durchfedern des Federarms an der Stelle des Sperrglieds um dessen Eingriffstiefe in die Sperrausnehmungen ermöglicht. Dann empfiehlt es sich weiter, die Anordnung so zu treffen, daß am Federbügel zwei in Umfangsrichtung in gegenseitigem Abstand befindliche Vorsprünge vorgesehen sind, von denen der sperrgliedseitige Vorsprung die Anlage des Federarms an der Steuerkurve und der andere Vorsprung das Rastglied der Rasteinrichtung bildet. Im einzelnen ist der Federbügel vorzugsweise durch ein Federband und das Sperrglied unmittelbar durch das rückwärtige Ende des Federbands gebildet, gesehen in der dem Schließen des Bohrfutters entsprechenden Drehrichtung des Spannrings. Die Vorsprünge können in einfacher Weise als Auswölbungen an das Federband angebogen sein.

Eine erste Möglichkeit zur Anordnung des Federbügels ist dadurch gekennzeichnet, daß der Federbügel in einem zwischen dem Spannring und dem Stellring in Umfangsrichtung verlaufenden Schlitz angeordnet und am Spannring formschlüssig gegen Verdrehen gesichert ist, daß die Ringwand des Spannrings mit einem Fenster für den Durchtritt des Sperrglieds in die Sperrausnehmungen versehen ist, und daß der Schlitz mindestens im Bereich des Rastglieds eine die Rastverstellungen des Rastglieds ermöglichende Erweiterung aufweist. Dabei bestehen im einzelnen die Möglichkeiten, daß der Federbügel mit zur Futterachse paralleler Ausrichtung der Federbandfläche im Schlitz liegt und die Sperrausnehmungen axial an einer futterkörperseitigen kreiszylindrischen Umfangsfläche verlaufen, oder daß der Federbügel mit zur Futterachse radialer Ausrichtung der Federbandfläche im Schlitz liegt und die Sperrausnehmungen radial an einer futterkörperseitigen, zur Futterachse senkrechten Ringfläche verlaufen. Handelt es sich insbesondere um einen Spannring mit Zwischenring, bildet die Wand des Zwischenrings vorzugsweise eine radial gerichtete Ringscheibe, die axial zwischen der die Sperrausnehmungen aufweisenden Ringfläche und einer radialen Ringschulter des Stellrings liegt, wobei sich zwischen der Ringscheibe und der Ringschulter der den Federbügel aufnehmende Schlitz befindet und die Steuerkurve sowie die Rastaufnahme an der Ringschulter, das Fenster für den Durchtritt des Sperrglieds und die Schlitzerweiterung für das Rastglied an der Ringscheibe ausgebildet sind. Zur Verdrehungssicherung des Federbügels kann zweckmäßigerweise der Zwischenring mit seinen Anschlagstücken den Federbügel in Öffnungen durchsetzen, deren Ränder in Umfangsrichtung den Anschlagstücken anliegen.

Eine andere vorteilhafte Möglichkeit für die Anordnung des Federbügels ist bei einem Spannring mit Zwischenring dadurch gekennzeichnet, daß der mit seiner Federbandfläche parallel zur Futterachse ausgerichtete Federbügel in einem in Umfangsrichtung zwischen dem Futterkörper und dem Zwischenring verlaufenden Ringschlitz liegt, der futterkörperseitig vom Kranz der axial verlaufenden Sperrausnehmungen begrenzt ist, und daß der Federbügel mit auswärts gerichteter Vorspannung dem Zwischenring anliegt und mit seinen beiden Vorsprüngen den Zwischenring in Fenstern auswärts durchgreift, in denen der Federbügel gegen Verdrehen festgehalten ist. Im einzelnen empfiehlt es sich, daß der Ringschlitz radial breiter als der Federbügel dick ist, daß der Federbügel mit einem etwa mittig zwischen den beiden Vorsprüngen befindlichen Scheitelbereich radial auswärts am Zwischenring abgestützt ist und zwischen diesem Scheitelbereich und den beiden Vorsprüngen je einen Federsteg zur tangentialen Anlage am Kranz der Sperrausnehmungen bildet. Zweckmäßigerweise trägt dabei der das Rastglied bildende Vorsprung an seiner dem Scheitelbereich des Federbügels abgewandten Seite einen dem Kranz der Sperrausnehmungen unter Vorspannung tangential anliegenden Federschenkel. Weiter empfiehlt es sich, daß der Federbügel im Scheitelbereich zwischen seinen beiden Vorsprüngen einen dritten, den Zwischenring in einem weiteren Fenster nach außen durchgreifenden Vorsprung aufweist, der in eine auf der Wandinnenseite des Stellrings vorgesehene Nut greift, die sich in Umfangsrichtung mindestens über den maximal möglichen Verdrehungsweg des Stellrings gegenüber dem Spannring erstreckt und mit mindestens einer ihrer Seitenwände eine axiale Anlage für den Vorsprung bildet, wodurch der Stellring gegen Axialverschiebung am Spannring gesichert ist. Dann liegen diese Sicherung, der Sperreingriff des Sperrglieds in die Sperrausnehmungen und der Rasteingriff des Rastglieds in die Rastaufnahmen sämtlich in derselben, zur Futterachse senkrechten Ebene, was eine völlig symmetrische, Kippmomente vermeidende Beanspruchung der beteiligten Teile ergibt. Diese Vorteile werden noch weiter durch die tangentiale Anlage der Federstege und des Federschenkels am Kranz der Sperrausnehmungen gefördert, die gemeinsam eine sehr präzise Ausrichtung des Federbügels am Spannring in Bezug auf den Kranz der Sperrausnehmungen einerseits und auf die Rastaufnahmen andererseits und damit sehr genaue Werte für die Federkräfte ergeben, mit denen der Federbügel das Sperrglied im Sperreingriff und das Rastglied im Rastsitzt hält.

Soweit es im übrigen um die Sicherung des Stellrings gegen axiales Verschieben geht, kann anstelle des mittleren Vorsprungs des Federbügels oder auch ergänzend zu ihm die Anordnung so getroffen werden, daß der Zwischenring an einer in Umfangsrichtung zwischen den Vorsprüngen und gegenüber dem Federbügel liegenden Stelle eine vom Federbügel unabhängige Federspange aufweist, die radial nach außen in eine auf der Wandinnenseite des Stellrings vorgesehene Nut greift, die sich in Umfangsrichtung mindestens über den maximal möglichen Verdrehungsweg des Stellrings gegenüber dem Spannring erstreckt und mit mindestens einer ihrer Seitenwände eine axiale Anlage für die Federspange bildet, durch welche der Stellring gegen Axialverschiebung am Spannring gesichert ist.

Im folgenden wird die Erfindung an in der Zeichnung dargestellten Ausführungsbeispielen näher erläutert; es zeigen:
- Fig. 1: ein Bohrfutter nach der Erfindung, links in einem Axialschnitt, rechts in einer Seitenansicht, jeweils in der Stellung der Spannbacken bei geringstem Spanndurchmesser und im ungesperrten Futterzustand,
- Fig. 2: den Schnitt II - II in Fig. 1,
- Fig. 3: den Schnitt III - III in Fig. 1,
- Fig. 4: den Schnitt IV - IV in Fig. 1, und zwar in der Teilfig. 4.1 im ungesperrten, in der Teilfig. 4.2 im gesperrten Futterzustand,
- Fig. 5: eine andere Ausführungsform des Bohrfutters nach der Erfindung in einer der Fig. 1 entsprechenden Darstellung,
- Fig. 6: den Schnitt VI - VI in Fig. 5,
- Fig. 7: den Schnitt VII - VII in Fig. 5,
- Fig. 8: das in Fig. 5 mit VIII bezeichnete Detail in vergrößerter Darstellung,
- Fig. 9: eine weitere Ausführungsform des erfindungsgemäßen Bohrfutters,
- Fig. 10: den Schnitt X - X in Fig. 9,
- Fig. 11: den Schnitt XI - XI in Fig. 9, und zwar in der Teilfig. 11.1 im ungesperrten, in der Teilfig. 11.2 im gesperrten Futterzustand,
- Fig. 12: eine weitere Ausführungsform des erfindungsgemäßen Bohrfutters in einer der Fig. 1 entsprechenden Darstellung,
- Fig. 13: den Schnitt XIII - XIII in Fig. 12, und zwar in den Teilfig. 13.1 im ungesperrten, in der Teilfig. 13.2 im gesperrten Futterzustand,
- Fig. 14: eine wiederum andere Ausführungsform des Bohrfutters nach der Erfindung in einer der Fig. 1 entsprechenden Darstellung,
- Fig. 15: den Schnitt XV - XV in Fig. 14,
- Fig. 16: den Schnitt XVI - XVI in Fig. 14 in einer Abwicklung in Umfangsrichtung, und zwar in der Teilfig. 16.1 im ungesperrten, in der Teilfig. 16.2 im gesperrten Futterzustand,
- Fig. 17: nur den Zwischenring des Bohrfutters nach Fig. 14 im Axialschnitt,
- Fig. 18: eine Draufsicht auf den Zwischenring der Fig. 17,
- Fig. 19: eine nochmals andere Ausführungsform des erfindungsgemäßen Bohrfutters in einer der Fig. 1 entsprechenden Darstellung,
- Fig. 20: den Schnitt XX - XX in Fig. 19, und
- Fig. 21: den Schnitt XXI - XXI in Fig. 19, und zwar in der Teilfig. 21.1 im ungesperrten, in der Teilfig. 21.2 im gesperrten Futterzustand.

Die in der Zeichnung dargestellten Bohrfutter dienen zur Aufnahme eines nicht dargestellten Bohrers und besitzen je ein Futterkörper 1 zum Anschluß an eine ebenfalls nicht dargestellte Bohrspindel. Zum Anschluß der Bohrspindel besitzt der Futterkörper eine Gewindeaufnahme 2. Die Bohrfutter besitzen den Bohrer zentrierende, axial führende und/oder einspannende Spannbacken 5, die in der zur Futterachse 3 koaxialen Werkzeugaufnahme 4 zentrisch zur Futterachse verstellbar sind. Zu dieser Verstellung dient ein Spannring 8, der am Futterkörper 1 axial unverschiebbar und drehbar geführt und axial nach hinten über ein Kugellager 22, gegebenenfalls über einen Druckring 21, am Futterkörper 1 abgestützt ist. Um unerwünschte Verstellungen der Spannbacken 5 zu verhindern, kann die Drehstellung des Spannrings 8 fixiert werden. Dazu dient eine allgemein mit 11 bezeichnete und zwischen dem Spannring 8 und dem Futterkörper 1 ausgebildete Sperreinrichtung, die aus einem koaxialen Kranz von Sperrausnehmungen 10 auf der Seite des Futterkörpers und auf der Seite des Spannrings 8 aus mindestens einem Sperrglied 12 besteht, das unter der Kraft einer Sperrfeder in die Sperrausnehmungen 10 greift. Dabei liegen das Sperrglied 12 und die es aufnehmenden Sperrausnehmungen 10 einander in derart geneigten Flankenflächen 13', 13'' an, daß diese den Spannring 8 in der dem Öffnen des Bohrfutters entsprechenden Drehrichtung (Pfeil 14) gegen Verdrehen verriegeln, beim Verdrehen des Spannrings 8 von Hand mit einem dazu ausreichend großen Drehmoment in der entgegen gesetzten, also dem Schließen des Bohrfutters entsprechenden Drehrichtung (Pfeil 15) das Sperrglied 12 aber gegen die Federkraft aus den Sperrausnehmungen 10 herausdrücken und von Sperrausnehmung zu Sperrausnehmung entlang dem Umfang des Futterkörpres 1 verrutschen lassen. Unter den im Bohrbetrieb auftretenden Schwingungsbeanspruchungen des Bohrfutters bleibt das Futter aber auch in dieser dem Pfeil 15 entsprechenden Drehrichtung gesperrt. Die für dieses Sperrverhalten unterschiedliche Neigung der Flankenflächen 13', 13'' wird auf einfache Weise durch eine sägezahnförmige Gestaltung erreicht, wobei die steilere Flankenfläche 13' der Zahnbrust und die flachere Flankenfläche 13'' dem Zahnrücken entspricht. Das Sperrglied 12 kann zwischen seinen an den Sperrausnehmungen 10 ein- und ausgerückten Zuständen verstellt werden, wozu das Sperrglied 12 durch eine Steuerkurve 35 an einem koaxialen, ebenfalls axial unverschiebbaren Stellring 9 verstellbar und entsprechend der Stellring 9 relativ zum Spannring 8 verdrehbar ist. Diese Verdrehung des Stellrings 9 relativ zum Spannring 8 ist in beiden Drehrichtungen (Pfeile 14, 15) formschlüssig begrenzt, wozu Anschläge 16', 16'' vorgesehen sind. Durch Verdrehen des Stellrings 9 in der dem Schließen des Bohrfutters entsprechenden Drehrichtung (Pfeil 15) verstellt sich das Sperrglied 12 aus dem ausgerückten Zustand in den eingerückten Zustand und umgekehrt, also durch Verdrehen des Stellrings 9 in der dem Öffnen des Bohrfutters entsprechenden Drehrichtung (Pfeil 14) aus dem eingerückten Zustand in den ausgerückten Zustand. Zwischen dem Stellring 9 und dem Spannring 8 ist eine allgemein mit 17 bezeichnete Rasteinrichtung vorgesehen, die in Umfangsrichtung zwei Raststellungen aufweist, wobei sich in der einen Raststellung das Sperrglied 12 in dem an den Sperrausnehmungen 10 eingerückten Zustand und in der anderen Raststellung im ausgerückten Zustand befindet, wie ein Vergleich der Figurenpaare 4.1, 4.2 bzw. 11.1, 11.2 bzw. 13.1, 13.2 oder 21.1, 21.2 erkennen läßt. Dabei sind die Raststellungen durch den Eingriff eines von der Kraft einer Rastfeder beaufschlagten Rastgliedes 38'' auf der Seite des Spannrings 8 in entsprechend am Stellring 9 angeordnete Rastaufnahmen 17'' gebildet. Die Sperrfeder und die Rastfeder sind gemeinsam von einem Federbügel 38 gebildet, der sich in Umfangsrichtung längs des Spannrings 8 erstreckt und drehfest mit dem Spannring 8 verbunden ist.

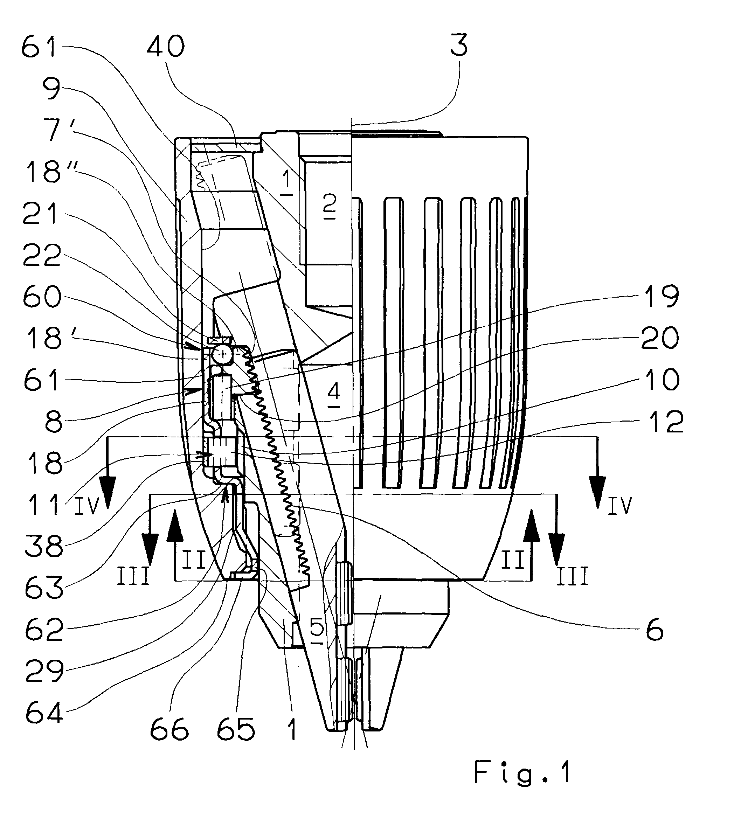

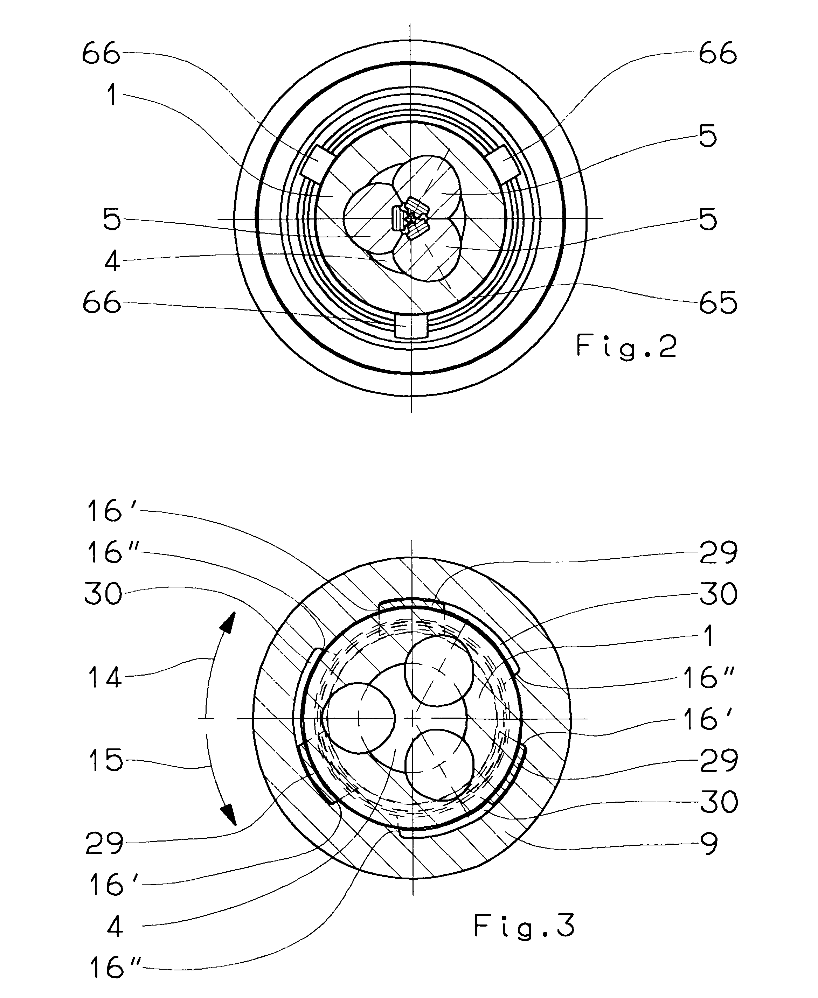

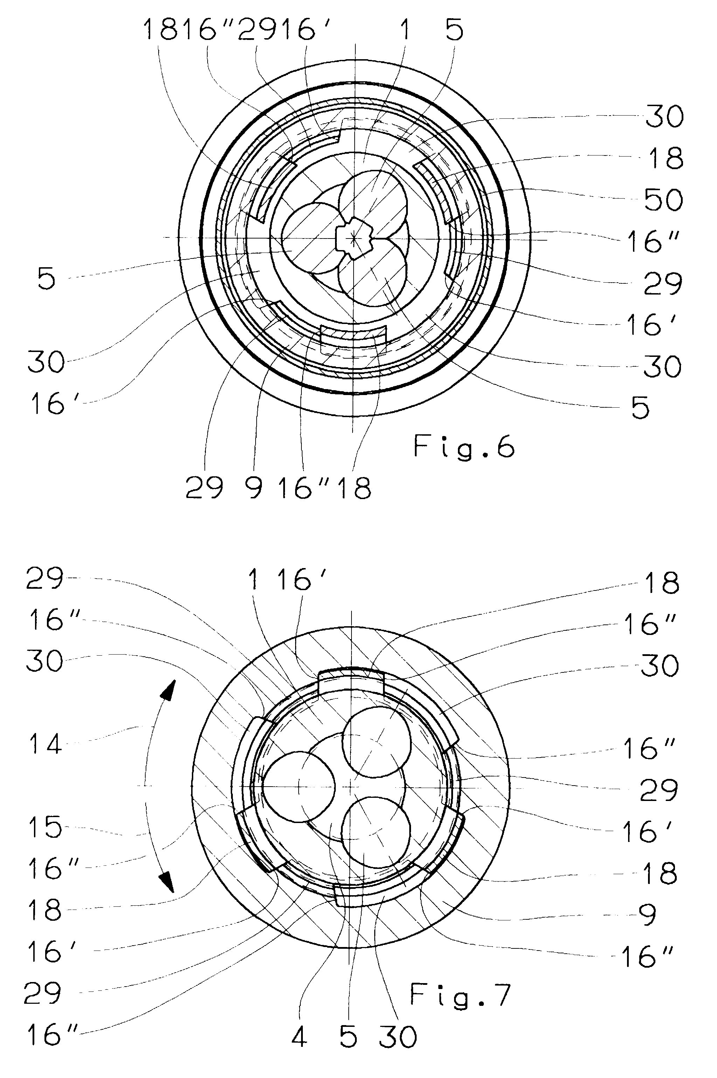

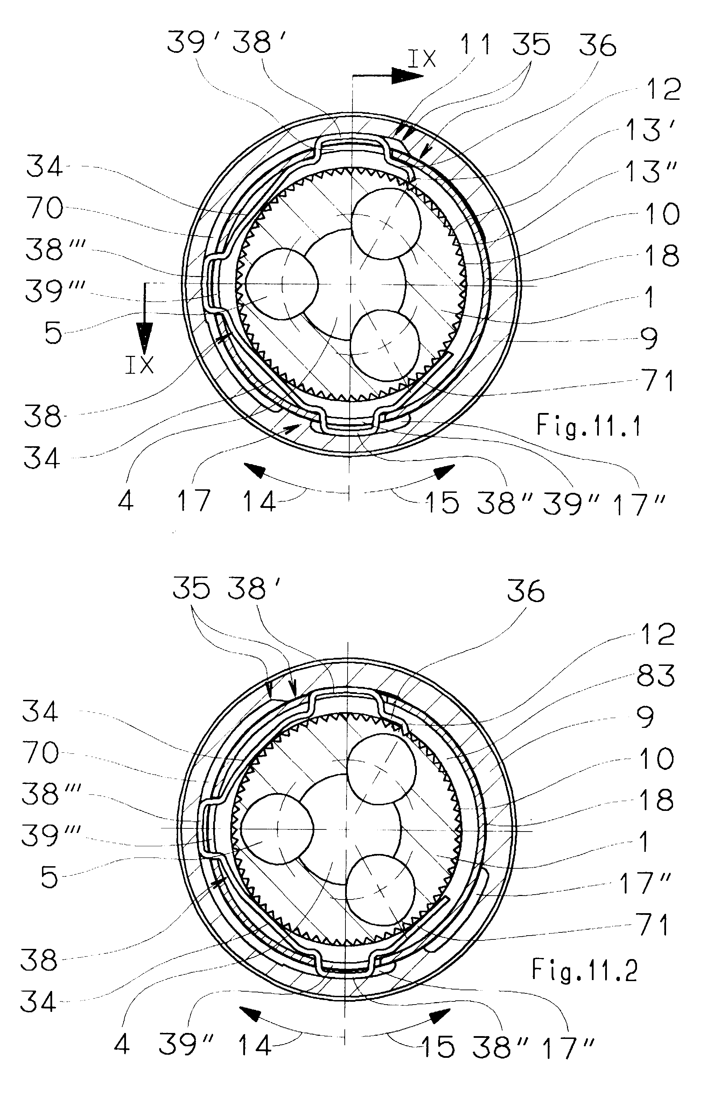

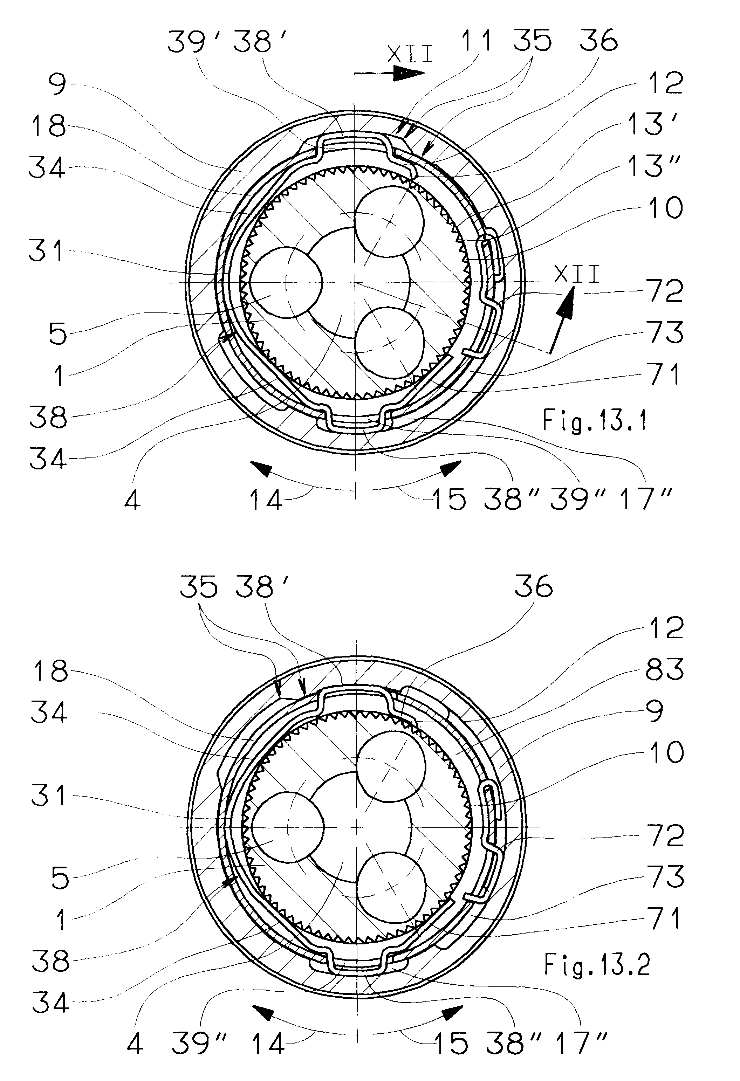

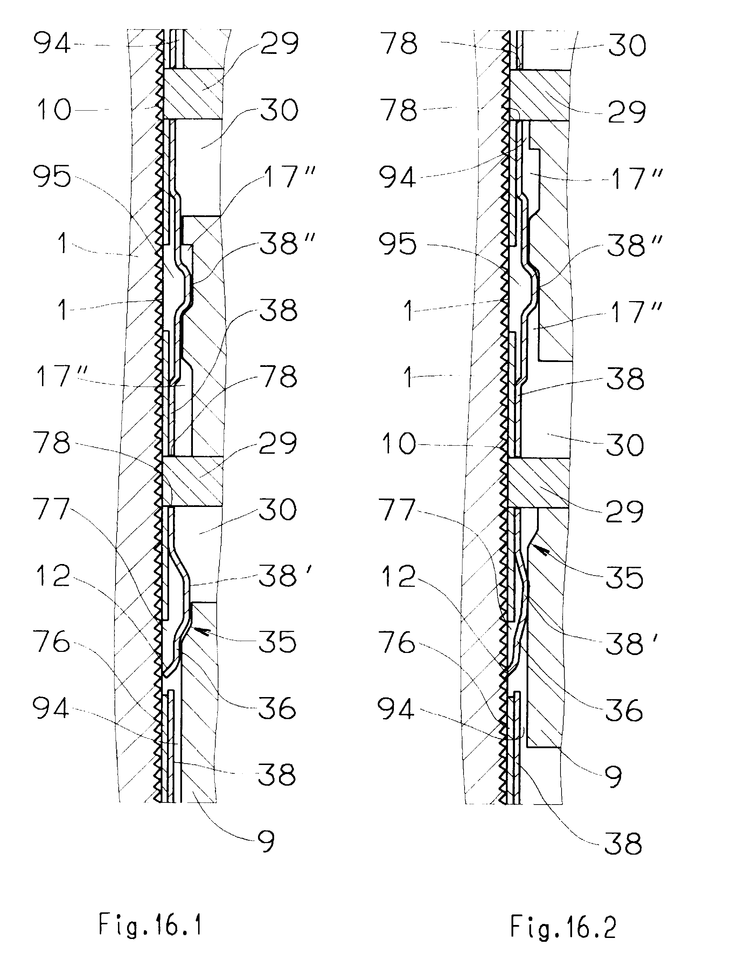

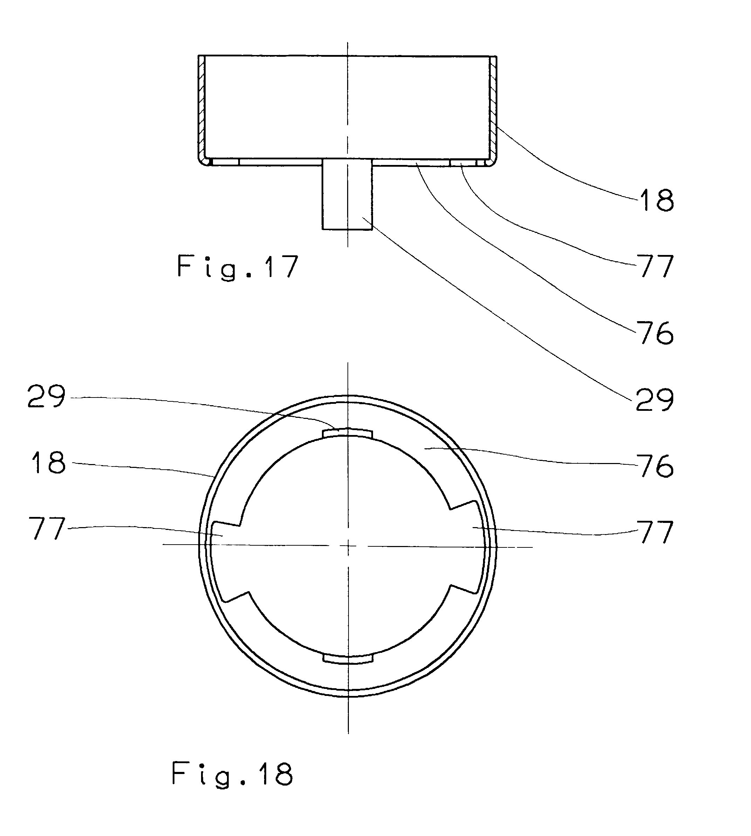

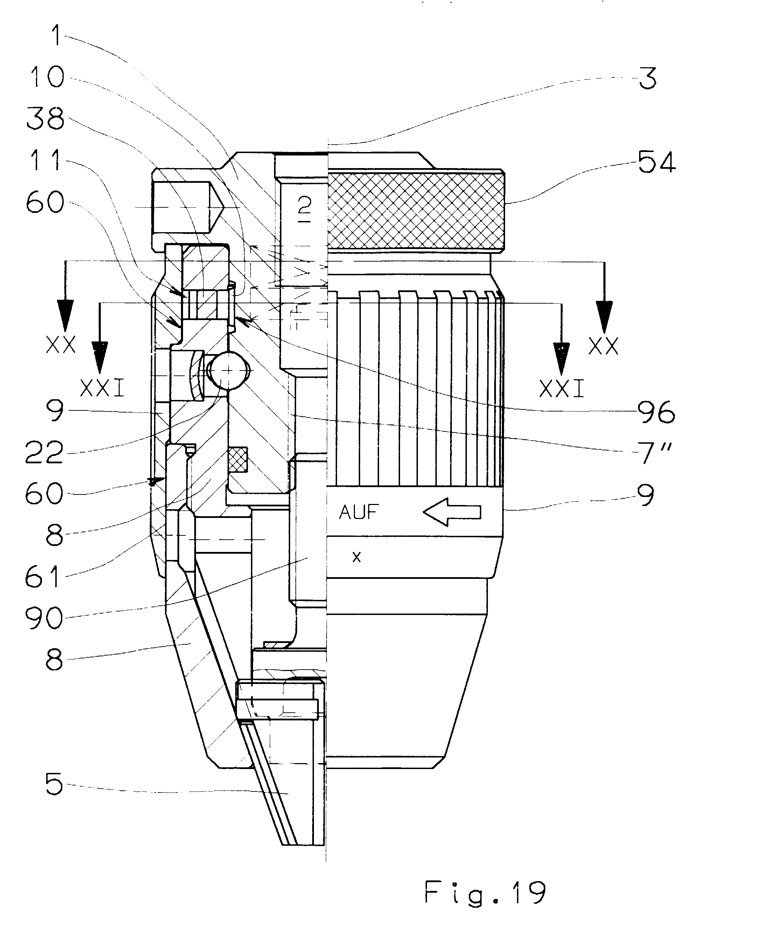

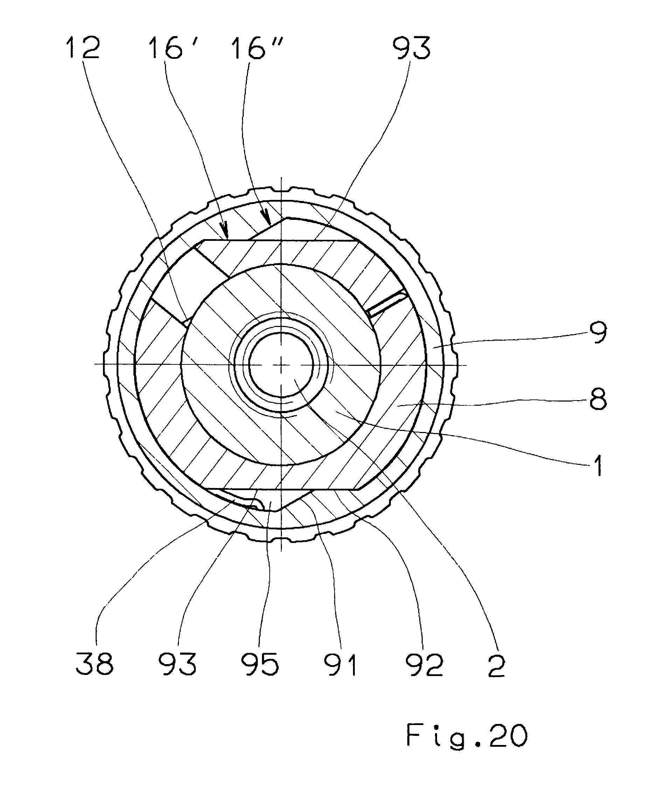

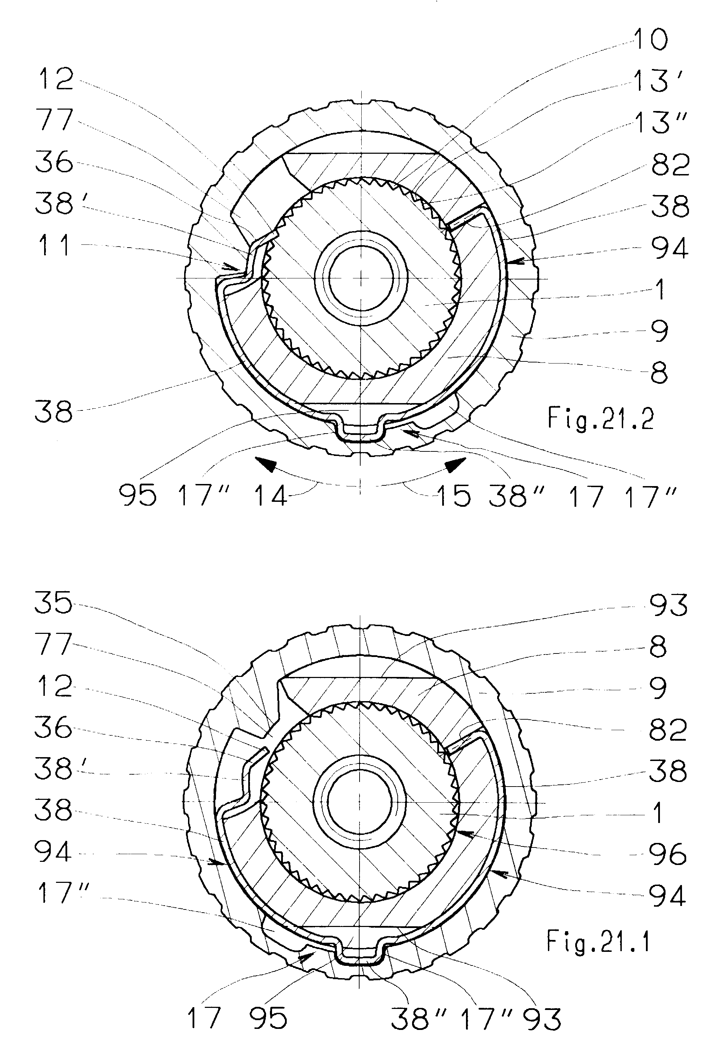

Die Ausführungsformen nach den Fig. 1 bis 18 zeigen nur von Hand spannbare Bohrfutter, bei welchen die Spannbacken 5 im Futterkörper 1 geführt und über eine Backenverzahnung 6 mit einem Spanngewinde 7' am Spannring 8 in Eingriff stehen. Das Ausführungsbeispiel nach den Fig. 19 bis 21 dagegen zeigt ein selbstspannendes Bohrfutter, bei dem die Spannbacken 5 am Spannring 8 geführt und axial an einem in Richtung um die Futterachse 3 mit den Spannbacken 5 drehschlüssigen Spannkopf 90 gehalten sind, der in einem im Futterkörper 1 vorgesehenen Spanngewinde 7'' verdrehbar ist.

Im Fall der nur von Hand spannbaren Bohrfutter besitzt der Spannring 8 einen eine Führung für den Stellring 9 bildenden koaxialen Zwischenring 18, der die spannringseitigen Teile der Anschläge 16', 16'' für den Stellring und der außerdem den Federbügel 38 trägt, sowie einen Kragenteil 18' umfaßt, der den das Spanngewinde 7' tragenden Teil des Spannrings 8 drehfest umschließt. Dabei besteht der das Spanngewinde 7' tragende Teil 18'' des Spannrings 8 aus zwei umfangsmäßig geteilten, nämlich zunächst an jeder Teilung durch eine Bohrung 19 geschwächten und dann gebrochenen Ringhälften, die in einer Ringnut 20 des Futterkörpers 1 gegeneinander zusammengesetzt und durch den Kragenteil 18' am Futterkörper 1 zusammengehalten sind. Selbstverständlich kann aber der Spannring 8 auch einstückig ausgebildet sein, was jedoch in der Zeichnung nicht weiter dargestellt ist.

In allen Fällen besitzt der Spannring 8 bzw. Zwischenring 18 zur radialen Führung des Stellrings 9 eine kreiszylindrische Außenfläche 60, der die Spannhülse 9 mit einer entsprechend kreiszylindrischen Innenfläche 61 anliegt.

Im Ausführungsbeispiel nach den Fig. 1 bis 18 erstreckt sich diese kreiszylindrische Innenfläche 61 am Stellring 9 im gesamten axialen Bereich mit unverändertem Radius zwischen seinem rückwärtigen Ringende und dem Spannring 8. Daher kann der in axialer Richtung ungeteilt ausgebildete Stellring 9 axial von vorn her über den Futterkörper 1 auf den am Futterkörper fertig montierten Spannring 8 aufgeschoben werden, worauf der Stellring in seiner aufgeschobenen Endlage axial gesichert wird. Dazu kann der Zwischenring 18 eine kreisringförmige Außenschulter 62 aufweisen, welcher der Stellring 9 zur axialen Abstützung nach hinten mit einer entsprechend kreisringförmigen Innenschulter 63 anliegt. Die entsprechende Sicherung des Stellrings 9 gegen axiale Verschiebungen nach vorn kann entweder ebenfalls am Zwischenring 18, wie weiter unten noch näher beschrieben werden wird, oder im Bereich axial hinter dem Spannring 8 am Futterkörper 1, beispielsweise an einem mit dem Futterkörper 1 verbundenen Abschlußring 40 erfolgen, der auch zur radialen Führung des Stellrings 9 im Bereich seines rückwärtigen Ringendes beitragen kann.

Außer in den Ausführungsformen nach den Fig. 1 bis 4 und 19 bis 21 ist axial vor dem Stellring 9 ein ihm gegenüber frei verdrehbarer Anschlagring 50 vorgesehen, der am Futterkörper 1 axial unverschiebbar und drehbar gelagert ist, wozu der Anschlagring 50 axial nach hinten an einer Ringschulter 51 des Futterkörpers 1 und axial nach vorn an einem Sprengring 52 gehalten ist, der in einer Ringnut am Futterkörper 1 sitzt. Der Anschlagring 50 schützt den Stellring 9 davor, beim Durchbohren einer Wand an die Wand anzustoßen und dadurch gebremst zu werden, was dazu führen könnte, daß das Bohrfutter sich so festzieht, daß es nur noch mit Mühe wieder geöffnet werden kann. Auch schützt der Anschlagring 50 den Stellring 9 gegen größere axiale Belastung von vorn, so daß die axiale Abstützung des Stellrings 9 nach hinten am Zwischenring 18 entsprechend gering beansprucht wird. Im übrigen schützt der Anschlagring 50 den häufig als reines Kunststoffteil ausgebildeten Spannring 9 vor den im vorderen Ringteil besonders hohen Verschleißbeanspruchungen.

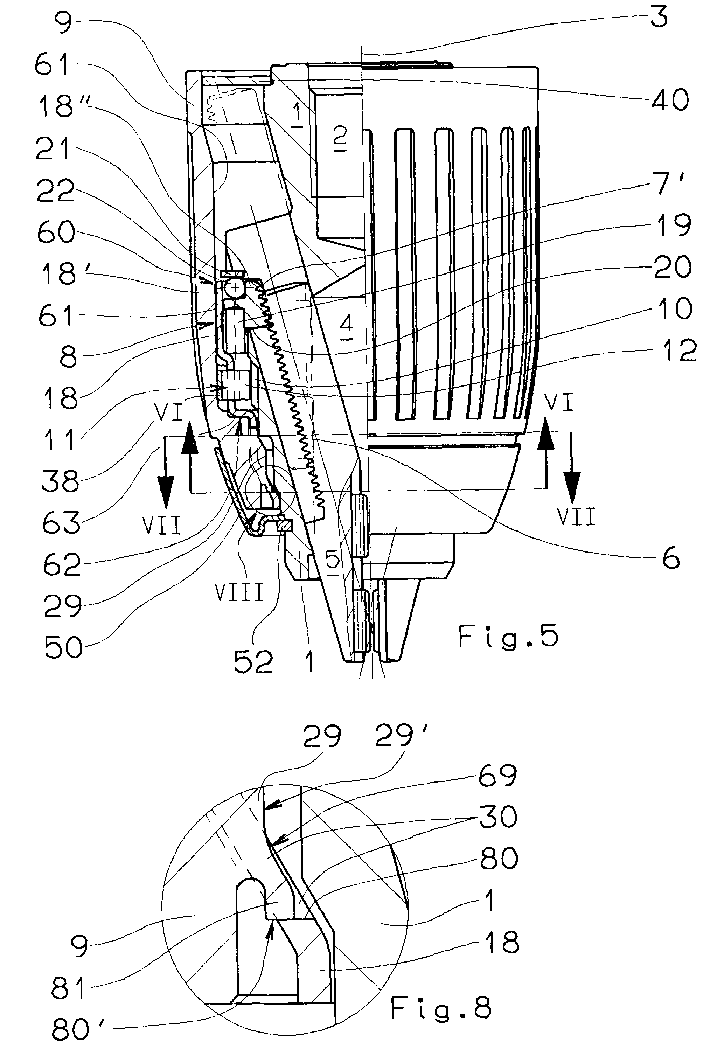

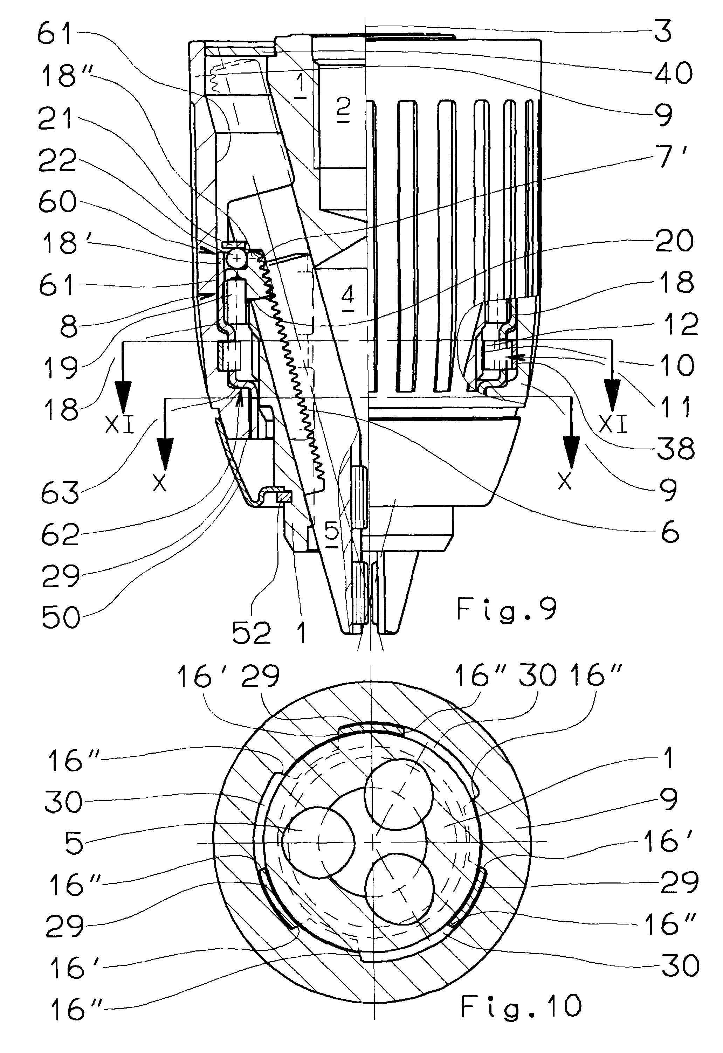

Für die Anschläge 16', 16'' zur Drehbegrenzung zwischen dem Stellring 9 und dem Spannring 8 sind in den Ausführungsbeispielen der Fig. 1 bis 18 allgemein mit 29 bezeichnete Anschlagstücke am einen Ring 8 oder 9 und eine das Anschlagstück 29 aufnehmende Aussparung 30 am jeweils anderen Ring vorgesehen, wobei das Anschlagstück 29 an den Enden des Drehwegs jeweils mit einer der die Aussparung 30 in Umfangsrichtung begrenzenden beiden Stirnflächen 16', 16'' zum Anschlag kommt. In den Ausführungsbeispielen sind jeweils drei solche gleichmäßig über den Futterumfang verteilt angeordnete Anschlagstücke 29 bzw. Aussparungen 30 vorhanden. Im einzelnen können, wie in den Fig. 1 bis 4 oder 9 bis 18, die Anschlagstücke 29 als Wandstücke des Zwischenrings 18 ausgebildet sein, die vom vorderen Rand des Zwischenrings 18 axial nach vorn in die auf der Wandinnenseite des Stellrings 9 ausgebildeten Aussparungen 30 vorstehen. Die Anschlagstücke 29 können die Aussparungen 30 axial bis zum vorderen Rand 64 des Stellrings 9 durchgreifen und dort an ihrem vorderen Ende als axialer Anschlag für den Stellring ausgebildet sein, der den Stellring 9 gegen Verschieben axial nach vorn sichert. Dazu sind in den Fig. 1 bis 4 die Anschlagstücke 29 an ihrem unteren Ende in Umfangsrichtung durch einen Ring 65 miteinander verbunden, der an seinem den Anschlagstücken 29 abgewandten Rand Zungen 66 trägt, die auf die vordere Stirnfläche des Stellrings 9 umgebogen sind. Im Ausführungsbeispiel nach den Fig. 9 bis 11 durchsetzen die Anschlagstücke 29 in der Wand des Stellrings 9 vorgesehene Schlitze, die in Umfangsrichtung längs eines Kreisbogens verlaufen und die Aussparungen 30 bilden. Die Fig. 5 bis 8 zeigen ein weiteres Ausführungsbeispiel eines Bohrfutters mit axialer Führung des Stellrings 9 allein am Zwischenring 18. Dazu sind die Anschlagstücke 29 als radial einwärts gerichtete Nocken an der Wandinnenseite des Stellrings 9 und die Aussparungen 30 als Fenster in einem sich axial nach vorn konisch verjüngenden Kragen 69 des Zwischenrings 18 ausgebildet. Die radial innen liegende Fläche 29' der Nocken 29 besitzt einen Abstand von der Futterachse 3, der mindestens gleich dem größten Außendurchmesser 80' des Fensterrands 80 am Zwischenring 18 ist, so daß die die Anschlagstücke 29 bildenden Nocken das Aufschieben des Stellrings 9 auf den Zwischenring 18 nicht behindern. Die Nocken 29 tragen jeweils eine radial federnde Rastnase 81, die bei auf den Zwischenring 18 vollständig aufgeschobenem Stellring 9 hinter dem axial vorderen Rand 80 des Fensters 30 einrastet und dadurch die Spannhülse 9 gegen Verschieben axial nach vorn sichert, wie dies im einzelnen aus Fig. 8 ersichtlich ist.

Im Ausführungsbeispiel nach den Fig. 19 bis 21 ist zur Ausbildung der die Verdrehung des Stellrings 9 gegenüber dem Spannring 8 begrenzenden Anschläge 16', 16'' der Spannring 8 mit zwei sich in Bezug auf die Futterachse 3 diametral gegenüber liegenden achsenparallelen Planflächen 93 ausgestattet. Jeder dieser Planflächen 93 stehen am Stellring 9 je zwei achsenparallele und zueinander schräge Anschlagflächen 91, 92 gegenüber, die durch ihre gegenseitige Schrägstellung den Winkel bestimmen, um den der Stellring 9 gegenüber dem Spannring 8 maximal verdrehbar ist.

Der Federbügel 38 bildet in allen Ausführungsbeispielen einen sich in Umfangsrichtung erstreckenden Federarm 36, der am freien Armende das Sperrglied 12 aufweist. Im eingerückten Zustand des Sperrglieds 12 liegt der Federarm 36 an der Steuerkurve 35 in einem Abstand vom Sperrglied 12 an, der das Durchfedern des Federarms 35 an der Stelle des Sperrglieds 12 um mindestens dessen Eingriffstiefe in die Sperrausnehmungen 10 ermöglicht, so daß beim Festziehen des Futters das Sperrglied 12 über den Kranz der Sperrausnehmungen 10 hinwegrutschen kann. Am Federbügel 38 sind zwei in Umfangsrichtung in gegenseitigem Abstand befindliche Vorsprünge 38', 38'' vorgesehen. Von diesen bildet der sperrgliedseitige Vorsprung 38' die Anlage des Federarms 36 an der Steuerkurve 35, der andere Vorsprung 38'' das Rastglied der Rasteinrichtung 17. Der Federbügel 38 ist durch ein Federband und das Sperrglied 12 unmittelbar durch das rückwärtige Ende des Federbands gebildet, gesehen in der dem Schließen des Bohrfutters entsprechenden Drehrichtung des Spannrings 8 (Pfeil 15). Die Vorsprünge 38', 38'' sind jeweils in Form von Auswölbungen an das Federband angebogen.

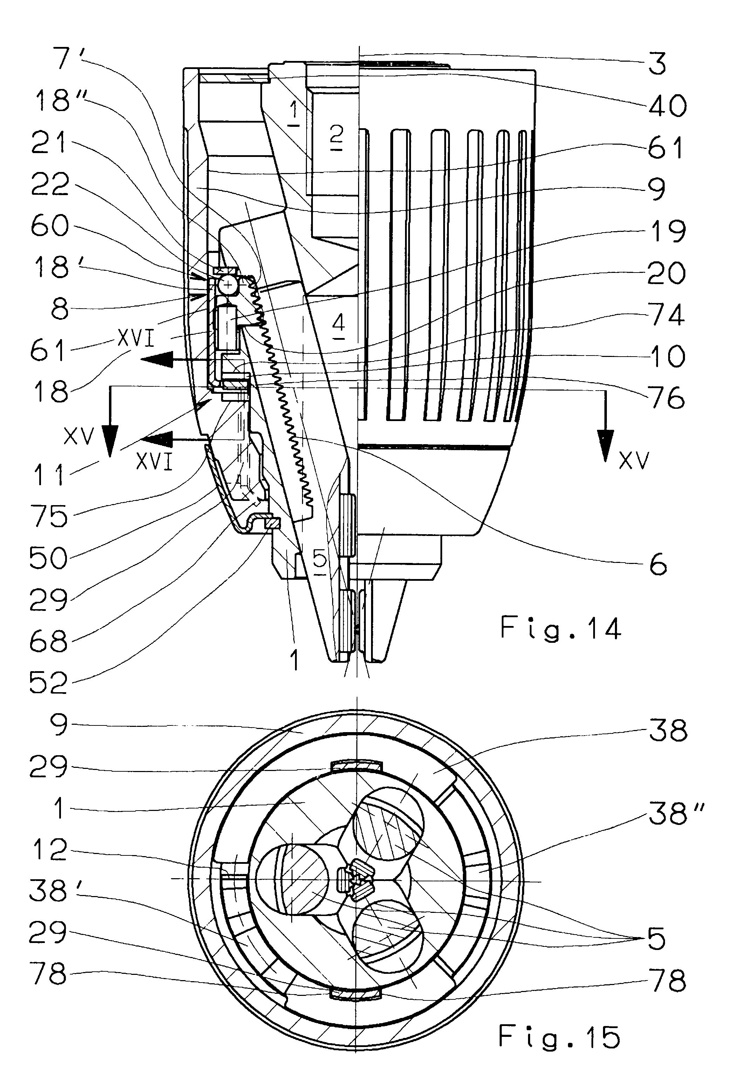

In den Ausführungsbeispielen nach den Fig. 14 bis 21 ist der Federbügel 38 in einem zwischen dem Spannring 8 und dem Stellring 9 in Umfangsrichtung verlaufenden Schlitz 94 angeordnet und am Spannring 8 formschlüssig gegen Verdrehen in noch näher zu beschreibender Weise gesichert. Die Ringwand des Spannrings 8 ist mit einem Fenster 77 für den Durchtritt des Sperrglieds 12 in die Sperrausnehmungen 10 versehen. Außerdem bildet der Schlitz 94 im Bereich des Rastgliedes 38'' eine die Rastverstellungen des Rastgliedes ermöglichende Erweiterung 95. Im einzelnen liegt im Ausführungsbeispiel nach den Fig. 19 bis 21 der Federbügel 38 mit zur Futterachse 3 paralleler Ausrichtung der Federbandfläche im Schlitz 94 und die Sperrausnehmungen 10 verlaufen entsprechend axial an einer futterkörperseitigen kreiszylindrischen Umfangsfläche 96. Das dem Federarm 36 gegenüber liegende Ende 82 des Federbügels 38 ist in einen Radialschlitz des Spannrings 8 umgebogen, so daß der Federbügel 38 gegenüber dem Spannring 8 nicht verdrehbar ist. Im Ausführungsbeispiel nach den Fig. 14 bis 16 dagegen liegt der Federbügel 38 mit zur Futterachse 3 radialer Ausrichtung der Federbandfläche im Schlitz 94 und die Sperrausnehmungen 10 verlaufen entsprechend radial an einer futterkörperseitigen, zur Futterachse 3 senkrecht stehenden Ringfläche 74. Die Wand des Zwischenrings 18 bildet eine radial gerichtete Ringscheibe 76, die axial zwischen der die Sperrausnehmungen 10 aufweisenden Ringfläche 74 und einer radialen Ringschulter 75 des Stellrings 9 liegt. Zwischen der Ringscheibe 76 und der Ringschulter 75 befindet sich der den Federbügel 38 aufnehmende Schlitz 94. Die Steuerkurve 35 sowie die Rastaufnahme 17'' sind an der Ringschulter 75 ausgebildet, das Fenster für den Durchtritt des Sperrglieds 12 und die Schlitzerweiterung 95 für das Rastglied 38'' an der Ringscheibe 76. Der Zwischenring 18 durchsetzt mit seinen Anschlagstücken 29 den Federbügel 38 in Öffnungen, deren Ränder 78 in Umfangsrichtung den Anschlagstücken 29 anliegen, so daß sich der Federbügel 38 nicht gegenüber dem Zwischenring 18 und damit dem Spannring 8 verdrehen kann.

Bei den Ausführungsformen nach den Fig. 1 bis 13 liegt der mit seiner Federbandfläche parallel zur Futterachse 3 ausgerichtete Federbügel 38 in einem in Umfangsrichtung zwischen dem Futterkörper 1 und dem Zwischenring 18 verlaufenden Ringschlitz 83, der futterkörperseitig vom Kranz der axial verlaufenden Sperrausnehmungen 10 begrenzt ist. Der Federbügel 38 liegt mit auswärts gerichteter Vorspannung dem Zwischenring 18 an und durchgreift mit seinen beiden Vorsprüngen 38', 38'' den Zwischenring 18 in Fenstern 39', 39'' radial nach außen. Die diese Fenster 39', 39'' durchgreifenden Vorsprünge 38', 38'' sichern den Federbügel 38 durch Anschlag an den die Fenster in Umfangsrichtung begrenzenden Fensterrändern gegen Verdrehen relativ zum Zwischenring 18. Die radiale Breite des Ringschlitzes 83 ist größer als die entsprechende Dicke des Federbügels 38, der mit einem etwa mittig zwischen den beiden Vorsprüngen 38', 38'' befindlichen Scheitelbereich 31 radial nach außen am Zwischenring 18 abgestützt ist und zwischen diesem Scheitelbereich 31 und den beiden Vorsprüngen 38', 38'' je einen Federsteg 34 zur tangentialen Anlage am Kranz der Sperrausnehmungen 10 bildet. Durch die Vorspannung des Federbügels 38 wird das Sperrglied 12 außer Eingriff an den Sperrausnehmungen 10 gehalten; im Sperrzustand muß es über die Steuerkurve 35 in die Sperrausnehmungen 10 hineingedrückt werden. Jedenfalls beim Sperreingriff des Sperrglieds 12 in die Sperrausnehmungen 10 liegen beide Federstege 34 federnd am Kranz der Sperrausnehmungen 10 an, so daß sich der Federbügel 38 in seiner Lage im Ringschlitz 83 selbsttätig justiert. In diesem Sinne günstig erweist sich auch ein Federschenkel 71, den der Federbügel 38 mit seinem dem Vorsprung 38'' abgewandten Ende bildet und der ebenfalls unter Vorspannung dem Kranz der Sperrausnehmungen 10 anliegt. Die dem Futterkörper 1 anliegenden beiden Federstege 34 und der Federschenkel 71 üben im übrigen eine Bremswirkung aus, durch die beim Bohrbetrieb auftretende Vibrationen an Futterkörper 1, Spannring 8 bzw. Zwischenring 18 und Stellring 9 gedämpft werden.

Die beiden Vorsprünge 38', 38'' liegen sich in Bezug auf die Futterachse 3 etwa diametral gegenüber. Im Ausführungsbeispiel nach den Fig. 9 bis 11 besitzt der Federbügel 38 im Scheitelbereich zwischen seinen beiden Vorsprüngen 38', 38'' einen dritten, den Zwischenring 18 in einem weiteren Fenster 39''' nach außen durchgreifenden Vorsprung 38'''. Dieser Vorsprung 38''' greift in einer auf der Wandinnenseite des Stellrings 9 vorgesehene Nut 70, die sich in Umfangsrichtung mindestens über den maximal möglichen Verdrehungsweg des Stellrings 9 gegenüber dem Spannring 8 erstreckt. Diese Nut 70 bildet mit ihren beiden Seitenwänden eine axiale Anlage für den Vorsprung 38''', wodurch der Stellring 9 gegen Axialverschiebungen am Spannring 8 gesichert ist, so daß in diesem Fall auch auf die Ringschulter 63 verzichtet werden könnte. Eine vergleichbare axiale Führungsfunktion empfiehlt sich für die beiden Vorsprünge 38', 38'' jedoch nicht, da hier die Anlage des Federbügels 38 an den Seitenwänden entsprechender Nuten die für den Sperrvorgang bzw. Rastvorgang erforderliche Beweglichkeit der beiden Vorsprünge 38', 38'' beeinträchtigen könnte.

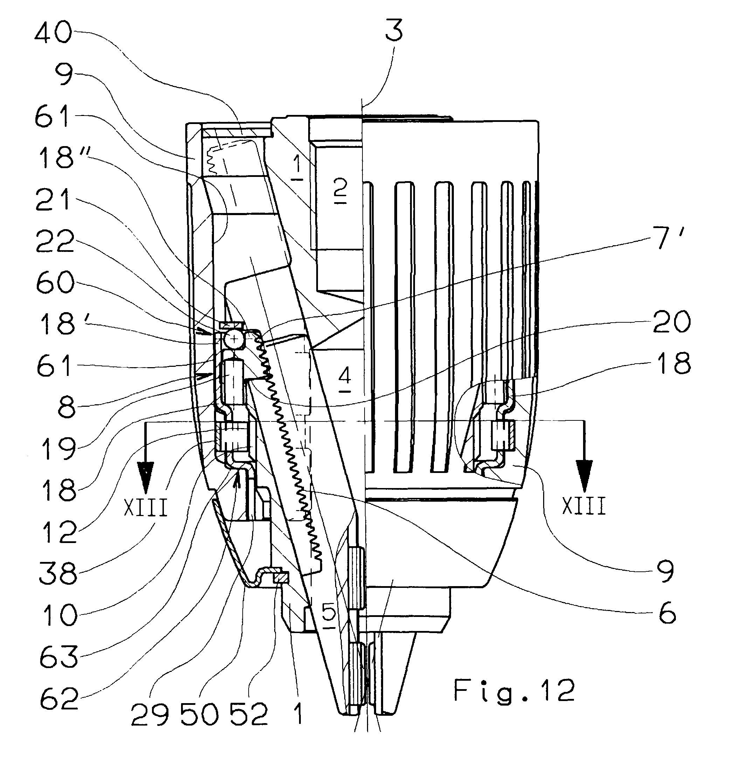

Im Ausführungsbeispiel nach den Fig. 12 bis 13 ist anstelle der durch den mittleren Vorsprung 38''' des Federbügels 38 bewirkten Axialführung des Stellrings 9 am Zwischenring 18 eine vom Federbügel 38 unabhängige Federspange 72 vorgesehen, die sich am Zwischenring 18 an einer in Umfangsrichtung zwischen den Vorsprüngen 38', 38'' und, in Bezug auf die Futterachse 3, etwa diametral gegenüber dem Scheitelbereich 31 befindet. Die Federspange 72 greift ebenfalls radial nach außen in eine auf der Wandinnenseite des Stellrings 9 vorgesehene Nut 73, die sich wie die Nut 70 in Umfangsrichtung mindestens über den maximal möglichen Verdrehungsweg des Stellrings 9 gegenüber dem Zwischenring 18 erstreckt und die mit ihren Seitenwänden ebenfalls eine axiale Anlage für die Federspange 72 bildet, wodurch die Federspange 72 in gleicher Weise wie der mittlere Vorsprung 38''' eine Sicherung des Stellrings 9 gegen Axialverschiebungen am Zwischenring 18 ergibt.

In den Ausführungsbeispielen nach den Fig. 1 bis 18 sind die Anschläge 16', 16", die Sperreinrichtung 11 und die Rasteinrichtung 17 axial vor dem Spanngewinde 7' angeordnet. Selbstverständlich liegt es im Rahmen der Erfindung, diese Teile, zumindest einige davon, axial hinter dem Spanngewinde 7' vorzusehen, wobei sich insbesondere der körperfeste Druckring 21 dazu anbietet, mit den Sperrausnehmungen 10 versehen zu werden.

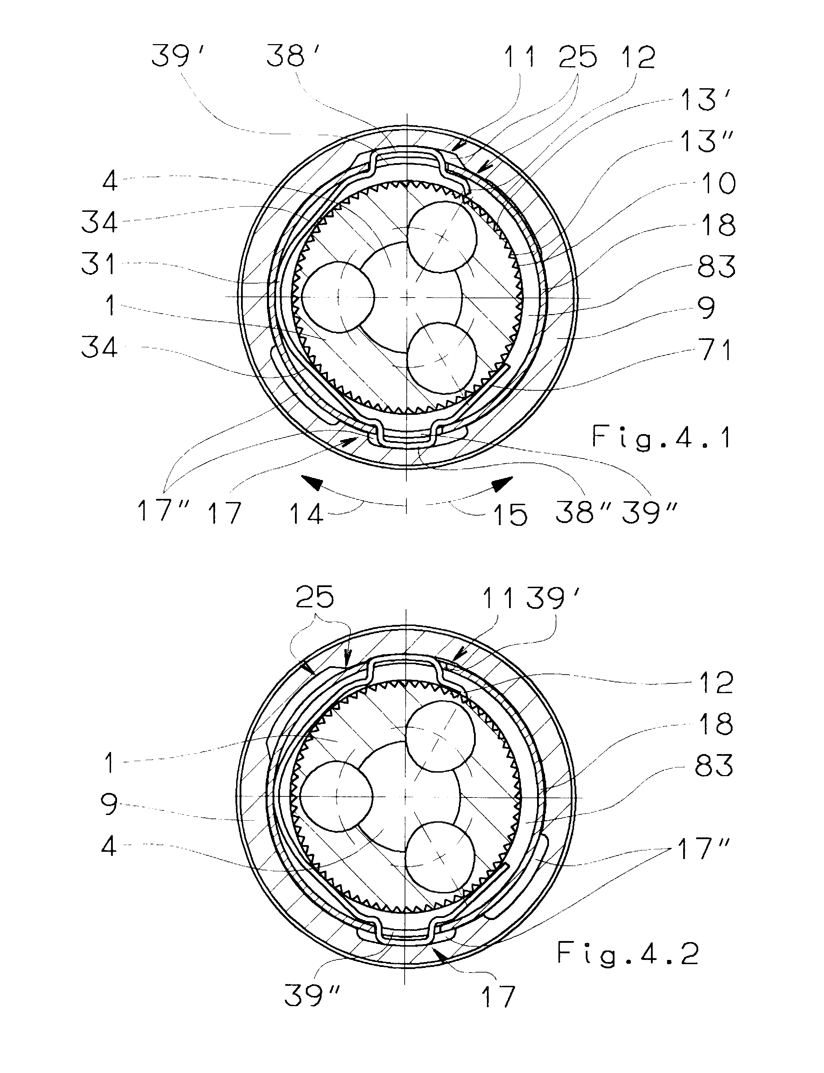

Im folgenden wird die Funktionsweise des erfindungsgemäßen Bohrfutters anhand des Ausführungsbeispiels nach den Fig. 1 bis 4.1, 4.2 kurz erläutert:

Die Fig. 1 bis 4.1 zeigen das Bohrfutter im ungesperrten Zustand. Der Federarm 36 ist radial nach außen verstellt, so daß das Sperrglied 12 außerhalb der Sperrausnehmungen 10 steht. Der in die Rastausnehmung 17'' greifende Rastvorsprung 38'' sichert den Zwischenring 18 und den Stellring 9 gegen Verdrehungen gegeneinander, so daß beim Drehen des Stellrings 9 über den Zwischenring 18 der Spannring 8 relativ zum Futterkörper 1 frei verdreht werden kann, solange das Bohrfutter offen ist. Befindet sich in der Werkzeugaufnahme 4 des Bohrfutters ein Bohrerschaft und wird der Stellring 9 in Richtung des Pfeils 15, also im Sinne eines Schließens des Futters verdreht, erfolgt zunächst eine Mitnahme des Spannrings 8 in der schon beschriebenen Weise, bis die Spannbacken 5 am Werkzeugschaft zur Anlage kommen. Eine weitere Mitnahme des Spannrings 8 durch den Stellring 9 ist dann nicht mehr möglich, so daß sich der Stellring 9 unter Überwindung der Rasteinrichtung 17 in die in Fig. 4.2 gezeigte Stellung gegenüber dem Zwischenring 18 verstellt. In dieser Stellung drückt der Stellring 9 über die Steuerkurve 35 den Federarm 36 radial nach innen und damit das Sperrglied 12 in den eingerückten Zustand an den Sperrausnehmungen 10. Damit ist der Spannring 8 gegenüber dem Futterkörper 1 gegen ein Verdrehen in Richtung des Pfeils 14 und damit gegen ein unerwünschtes Öffnen des Bohrfutters gesichert. Jedoch kann das Bohrfutter weiter und fester gespannt, nämlich der Stellring 9 relativ zum Futterkörper 1 in Richtung des Pfeiles 15 verdreht werden, wobei nun der Stellring 9 über die Anschläge 16'' den Zwischenring 18 und damit den Spannring 8 in Richtung des Pfeiles 15 festzieht. - Zum Lösen und Öffnen des gespannten Futters (Fig. 4.2) wird zunächst der Stellring 9 in Richtung des Pfeiles 14 verdreht, wobei zunächst wieder die Rasteinrichtung 17 verstellt wird und sich die Anschlagstücke 29 in den Aussparungen 30 wieder in den aus Fig. 4.1 ersichtlichen Zustand verstellen und gleichzeitig die Steuerkurve 35 den Federarm 36 freigibt, so daß sich der Federarm 36 aufgrund seiner Vorspannung radial nach außen verstellen kann, bis das Sperrglied 12 aus den Sperrausnehmungen 10 ausgetreten ist. Beim weiteren Drehen des Stellrings 9 wird über die Anschläge 16' der Spannring 18 mitgenommen, wodurch das Bohrfutter gelöst und geöffnet wird. - Im Ergebnis ist zur Handhabung des erfindungsgemäßen Bohrfutters nur die drehende Betätigung des Stellrings 9 gegenüber dem Futterkörper erforderlich, was nur eine Hand erfordert, wenn der Futterkörper 1 über die Bohrspindel gehalten oder umgekehrt der Stellring 9 von Hand festgehalten und der Futterkörper 1 durch die Bohrspindel gedreht wird. Der Stellring 9 kann sich daher axial über praktisch die ganze Länge des Bohrfutters bis zum axial hinteren Futterende erstrecken und dabei die einzige von außen der Hand zugängliche Futterhandhabe bilden, wie es im Ausführungsbeispiel nach den Fig. 1 bis 18 der Fall ist. Nur wenn dennoch gewünscht wird, den Futterkörper 1 auch unabhängig von der Bohrspindel manipulieren zu können, empfiehlt es sich, den Abschlußring 40 in Form eines Halterings für den Futterkörper 1 auszubilden, wobei dann der Abschlußring 40 drehfest mit dem Futterkörper verbunden sein muß, was aber in den Ausführungsbeispielen nach den Fig. 1 bis 18 im einzelnen nicht weiter erläutert ist. Ein solcher Haltering 54 kann, wie bei dem selbstspannenden Bohrfutter nach den Fig. 19 bis 21 aber auch einstückig mit dem Futterkörper 1 ausgebildet sein.

## Patentansprüche

1. Bohrfutter, insbesondere zum Schlagbohren, mit einem an eine Bohrspindel anschließbaren Futterkörper (1), mit zwischen sich eine Aufnahme (4) für das Bohrwerkzeug bildenden Spannbacken (5), die zum Öffnen und Schließen des Bohrfutters durch einen am Futterkörper (1) drehbar und axial unverschiebbar geführten Spannring (8) verstellbar sind, ferner mit einer Sperreinrichtung (11) für den Spannring (8), bestehend aus einem koaxialen Kranz von Sperrausnehmungen (10) und aus mindestens einem Sperrglied (12), das unter der Kraft einer Sperrfeder in die Sperrausnehmungen (10) eingerückt ist, wobei das Sperrglied (12) und die Sperrausnehmungen (10) einander in derart geneigten Flankenflächen (13', 13") anliegen, daß diese den Spannring (8) in der dem Öffnen des Bohrfutters entsprechenden Drehrichtung gegen Verdrehen sperren, beim Verdrehen des Spannrings (8) in der entgegen gesetzten, also dem Schließen des Bohrfutters entsprechenden Drehrichtung aber das Sperrglied (12) gegen die Kraft der Sperrfeder aus den Sperrausnehmungen (10) herausdrücken und dadurch von Sperrausnehmung zu Sperrausnehmung verrutschen lassen, weiter mit einem zwischen Anschlägen (16', 16") begrenzt verdrehbaren koaxialen Stellring (9), durch dessen Verdrehen das Sperrglied (12) zwischen dem an den Sperrausnehmungen (10) eingerückten Zustand und einem aus den Sperrausnehmugen (10) ausgerückten Zustand verstellbar ist, und mit einer in Umfangsrichtung zwei Raststellungen für den Stellring (9) bildenden Rasteinrichtung (17), wobei sich das Sperrglied (12) in der einen Raststellung in dem an den Sperrausnehmungen (10) eingerückten Zustand, in der anderen Raststellung im ausgerückten Zustand befindet und die Raststellungen durch den Eingriff eines von der Kraft einer Rastfeder beaufschlagten Rastglieds (38") in entsprechend angeordnete Rastaufnahmen (17") gebildet sind, dadurch gekennzeichnet, daß die Anschläge (16', 16") für den Stellring (9) dessen Verdrehung in beiden Drehrichtungen gegenüber dem Spannring (8) begrenzen, daß der Kranz der Sperrausnehmungen (10) am Futterkörper (1) und das Sperrglied (12) am Spannring (8) angeordnet und zur Steuerung des Sperrglieds (12) eine Steuerkurve (35) am Stellring (9) ausgebildet ist, wobei durch Verdrehen des Stellrings (9) relativ zum Spannring (8) in dessen dem Schließen des Bohrfutters entsprechenden Drehrichtung das Sperrglied (12) sich aus dem ausgerückten Zustand in den eingerückten Zustand verstellt und umgekehrt, daß ferner das Rastglied (38") am Spannring (8) und die Rastaufnahmen (17") am Stellring (9) vorgesehen sind, und daß die Sperrfeder und die Rastfeder gemeinsam von einem Federbügel (38) gebildet sind, der sich in Umfangsrichtung längs des Spannrings (8) erstreckt und drehschlüssig mit ihm verbunden ist.

2. Bohrfutter nach Anspruch 1, dadurch gekennzeichnet, daß der Spannring (8) bei im Futterkörper (1) geführten Spannbacken (5) mit einem an den Spannbacken (5) im Eingriff stehenden Spanngewinde (7') versehen ist und einen koaxialen Zwischenring (18) aufweist, der die spannringseitigen Teile der Anschläge (16', 16") für den Stellring (9) und den Federbügel (38) trägt und ein Kragenteil (18') aufweist, der den das Spanngewinde (7') tragenden Teil des Spannrings (8) drehfest umschließt.

3. Bohrfutter nach Anspruch 2, dadurch gekennzeichnet, daß der das Spanngewinde (7') tragende Teil des Spannrings (8) aus zwei Ringhälften besteht, die durch den Kragenteil (18') des Zwischenrings (18) am Futterkörper (1) zusammengehalten sind.

4. Bohrfutter nach einem der Ansprüche 1 bis 3, dadurch gekennzeichnet, daß zur Ausbildung der die Verdrehung des Stellrings (9) gegenüber dem Spannring (8) begrenzenden Anschläge (16', 16") der eine der beiden Ringe (8, 9) mindestens eine achsenparallele Planfläche (93) aufweist, der am anderen Ring je zwei achsenparallele und zueinander schräge Anschlagflächen 91, 92) gegenüberstehen, die durch ihre gegenseitige Schrägstellung den Winkel bestimmen, um den der Stellring (9) gegenüber dem Spannring (8) maximal verdrehbar ist.

5. Bohrfutter nach einem der Ansprüche 1 bis 3, dadurch gekennzeichnet, daß zur Ausbildung der die Verdrehung des Stellrings (9) gegenüber dem Spannring (8) begrenzenden Anschläge (16', 16") mindestens ein Anschlagstück (29) am einen der beiden Ringe (8, 9) und eine das Anschlagstück (29) aufnehmende Aussparung (30) am anderen Ring vorgesehen ist, wobei das Anschlagstück (29) an den Enden des Drehweges jeweils mit einer der die Aussparung (30) in Umfangsrichtung begrenzenden beiden Stirnflächen zum Anschlag kommt.

6. Bohrfutter nach Anspruch 5, dadurch gekennzeichnet, daß das Anschlagstück (29) als Wandstück des Zwischenrings (18) ausgebildet ist, das vom axial vorderen Rand des Zwischenrings (18) axial nach vorn in die auf der Wandinnenseite des Stellrings (9) ausgebildete Aussparung (30) vorsteht.

7. Bohrfutter nach Anspruch 5, dadurch gekennzeichnet, daß das Anschlagstück (29) als radial einwärts gerichteter Nocken an der Wandinnenseite des Stellrings (9) und die Aussparung (30) als Fenster in einem sich axial nach vorn etwa konisch verjüngenden Kragen (66) des Zwischenrings (18) ausgebildet ist.

8. Bohrfutter nach einem der Ansprüche 1 bis 7, dadurch gekennzeichnet, daß der Federbügel (38) einen sich in Umfangsrichtung erstreckenden Federarm (36) bildet der am freien Armende das Sperrglied (12) aufweist, wobei der Federarm (36) im eingerückten Zustand des Sperrglieds (12) der Steuerkurve (35) in einem Abstand vom Sperrglied (12) anliegt, der das Durchfedern des Federarms (35) an der Stelle des Sperrglieds (12) um dessen Eingriffstiefe in die Sperrausnehmungen (10) ermöglicht.

9. Bohrfutter nach Anspruch 8, dadurch gekennzeichnet, daß am Federbügel (38) zwei in Umfangsrichtung in gegenseitigem Abstand befindliche Vorsprünge (38', 38") vorgesehen sind, von denen der sperrgliedseitige Vorsprung (38') die Anlage des Federarms (36) an der Steuerkurve (35) und der andere Vorsprung (38") das Rastglied der Rasteinrichtung (17) bildet.

10. Bohrfutter nach Anspruch 9, dadurch gekennzeichnet, daß der Federbügel (38) durch ein Federband und das Sperrglied (12) unmittelbar durch das rückwärtige Ende des Federbands gebildet ist, gesehen in der dem Schließen des Bohrfutters entsprechenden Drehrichtung des Spannrings (8).

11. Bohrfutter nach Anspruch 10, dadurch gekennzeichnet, daß die Vorsprünge (38', 38") als Auswölbungen an das Federband angebogen sind.

12. Bohrfutter nach Anspruch 10 oder 11, dadurch gekennzeichnet, daß der Federbügel (38) in einem zwischen dem Spannring (8) und dem Stellring (9) in Umfangsrichtung verlaufenden Schlitz (94) angeordnet und am Spannring (8) formschlüssig gegen Verdrehen gesichert ist, daß die Ringwand des Spannrings (8) mit einem Fenster (77) für den Durchtritt des Sperrglieds (12) in die Sperrausnehmungen (10) versehen ist, und daß der Schlitz (94) mindestens im Bereich des Rastglieds (38") eine die Rastverstellungen des Rastglieds ermöglichende Erweiterung (95) aufweist.

13. Bohrfutter nach Anspruch 12, dadurch gekennzeichnet, daß der Federbügel (38) mit zur Futterachse (3) parallele Ausrichtung der Federbandfläche im Schlitz (94) liegt und die Sperrausnehmungen (10) axial an einer futterkörperseitigen kreiszylindrischen Umfangsfläche (96) verlaufen.

14. Bohrfutter nach Anspruch 12, dadurch gekennzeichnet, daß der Federbügel (38) mit zur Futterachse (3) radialer Ausrichtung der Federbandfläche im Schlitz (94) liegt und die Sperrausnehmungen (10) radial an einer futterkörperseitigen, zur Futterachse (3) senkrechten Ringfläche (74) verlaufen.

15. Bohrfutter nach Anspruch 14, dadurch gekennzeichnet, daß bei einem Spannring (8) mit Zwischenring (18) die Wand des letzteren eine radial gerichtete Ringscheibe (76) bildet, die axial zwischen der die Sperrausnehmungen (10) aufweisenden Ringfläche (74) und einer radialen Ringschulter (75) des Stellrings (9) liegt, wobei sich zwischen der Ringscheibe (76) und der Ringschulter (75) der den Federbügel (38) aufnehmende Schlitz (94) befindet und die Steuerkurve (35) sowie die Rastaufnahe (17") an der Ringschulter (75), das Fenster (77) für den Durchtritt des Sperrglieds (12) und die Schlitzerweiterung (95) für das Rastglied (38") an der Ringscheibe (76) ausgebildet sind.

16. Bohrfutter nach Anspruch 15, dadurch gekennzeichnet, daß der Zwischenring (18) mit seinen Anschlagstücken (29) den Federbügel (38) in Öffnungen durchsetzt, deren Ränder (78) in Umfangsrichtung den Anschlagstücken (29) anliegen.

17. Bohrfutter nach Anspruch 10 oder 11, dadurch gekennzeichnet, daß bei einem Spannring (8) mit Zwischenring (18) der mit seiner Federbandfläche parallel zur Futterachse (3) ausgerichtete Federbügel (38) in einem in Umfangsrichtung zwischen dem Futterkörper (1) und dem Zwischenring (18) verlaufenden Ringschlitz (83) liegt, der futterkörperseitig vom Kranz der axial verlaufenden Sperrausnehmungen (10) begrenzt ist, und daß der Federbügel (38) mit auswärts gerichteter Vorspannung den Zwischenring (18) anliegt und mit seinen beiden Vorsprüngen (38', 38") den Zwischenring (18) in Fenstern (39', 39") auswärts durchgreift, in denen der Federbügel (38) gegen Verdrehen festgehalten ist.

18. Bohrfutter nach Anspruch 17, dadurch gekennzeichnet, daß der Ringschlitz (83) radial breiter als der Federbügel (38) dick ist, daß der Federbügel (38) mit einem etwa mittig zwischen den beiden Vorsprüngen (38', 38") befindlichen Scheitelbereiche (31) radial auswärts am Zwischenring (18) abgestützt ist und zwischen diesem Scheitelbereich (31) und den beiden Vorsprüngen (38', 38") je einen Federsteg (34) zur tangentialen Anlage am Kranz der Sperrausnehmungen (10) bildet.

19. Bohrfutter nach Anspruch 18, dadurch gekennzeichnet, daß der das Rastglied bildende Vorsprung (38") an seiner dem Scheitelbereich (31) des Federbügels (38) abgewandten Seite einen dem Kranz der Sperrausnehmungen (10) unter Vorspannung tangential anliegenden Federschenkel (71) trägt.

20. Bohrfutter nach einem der Ansprüche 17 bis 19, dadurch gekennzeichnet, daß der Federbügel (38) im Scheitelbereich (31) zwischen seinen beiden Vorsprüngen (38', 38") einen dritten, den Zwischenring (18) in einem weiteren Fenster (39''') nach außen durchgreifenden Vorsprung (38''') aufweist, der in eine auf der Wandinnenseite des Stellrings (9) vorgesehene Nut (70) greift, die sich in Umfangsrichtung mindestens über den maximal möglichen Verdrehungsweg des Stellrings (9) gegenüber dem Spannring (8) erstreckt und mit mindestens einer ihrer Seitenwände eine axiale Anlage für den Vorsprung (38''') bildet, wodurch der Stellring (9) gegen Axialverschiebung am Spannring (8) gesichert ist.

21. Bohrfutter nach einem der Ansprüche 17 bis 20, dadurch gekennzeichnet, daß der Zwischenring (18) an einer in Umfangsrichtung zwischen den Vorsprüngen (38', 38") und gegenüber dem Federbügel (38) liegenden Stelle eine vom Federbügel unabhängige Federspange (72) aufweist, die radial nach außen in eine auf der Wandinnenseite des Stellrings (9) vorgesehene Nut (73) greift, die sich in Umfangsrichtung mindestens über den maximal möglichen Verdrehungsweg des Stellrings (9) gegenüber dem Spannring (8) erstreckt und mit mindestens einer ihrer Seitenwände eine axiale Anlage für die Federspange (72) bildet, durch welche der Stellring (9) gegen Axialverschiebung am Spannring (8) gesichert ist.

## Claims

1. A drilling chuck, in particular for hammer drilling, comprising a chuck body (1) which can be connected to a drilling spindle, clamping jaws (5) which form between them a receiving a means (4) for the drilling tool and which for opening and closing of the drilling chuck are displaceable by a clamping ring (8) which is guided on the chuck body (1) rotatably and axially immovably, a locking device (11) for the clamping ring (8) comprising a coaxial ring of locking recesses (10) and at least one locking member (12) which is engaged into the locking recesses (10) under the force of a locking spring, wherein the locking member (12) and the locking recesses (10) bear against each other at flank surfaces (13', 13") which are inclined in such a way that they lock the clamping ring (8) to prevent rotation thereof in the direction of rotation corresponding to opening of the drilling chuck but upon rotation of the clamping ring (8) in the opposite direction of rotation which therefore corresponds to closing of the drilling chuck they urge the locking member (12) out of the locking recesses (10) against the force of the locking spring and thereby allow the locking member to slip from one locking recess to another, a coaxial setting ring (9) which is rotatable limitedly between abutments (16', 16") and by the rotation of which the locking member (12) is displaceable between the condition of being engaged at the locking recesses (12) and a condition of being disengaged from the locking recesses (10), and a detent device (17) which in the peripheral direction forms two detent positions for the setting ring (9), wherein in the one detent position the locking member (12) is in the condition of being engaged at the locking recesses (10) and in the other detent position the locking member is in the disengaged condition and the detent positions are formed by the engagement of a detent member (38") subjected to the force of a detent spring into suitably arranged detent receiving means (17"), characterised in that the abutments (16', 16") for the setting ring (9) limit the rotation thereof in both directions of rotation with respect to the clamping ring (8), that the ring of locking recesses (10) is arranged on the chuck body (1) and the locking member (12) is arranged on the clamping ring (8) and to control the locking member (12) a control cam (35) is provided on the setting ring (9), wherein by virtue of rotation of the setting ring (9) relative to the clamping ring (8) in its direction of rotation corresponding to closing of the drilling chuck the locking member (12) is displaced from the disengaged condition into the engaged condition and vice-versa, that moreover the detent member (38") is provided on the clamping ring (8) and the detent receiving means (17") are provided on the setting ring (9), and that the locking spring and the detent spring are jointly formed by a spring loop (38) which extends in the peripheral direction along the clamping ring (8) and is non-rotatably connected thereto.

2. A drilling chuck according to claim 1 characterised in that with clamping jaws (5) guided in the chuck body (1) the clamping ring (8) is provided with a clamping screwthread (7') engaged at the clamping jaws (5) and has a coaxial intermediate ring (18) which carries the parts, which are at the clamping ring side, of the abutments (16', 16") for the setting ring (9) and the spring loop (38) and has a collar portion (18') which non-rotatably encloses the part of the clamping ring (8) carrying the clamping screwthread (7').

3. A drilling chuck according to claim 1 characterised in that the part of the clamping ring (8) which carries the clamping screwthread (7') comprises two ring halves which are held together by the collar portion (18') of the intermediate ring (18) on the chuck body (1).

4. A drilling chuck according to one of claims 1 to 3 characterised in that to provide the abutments (16', 16") which limit the rotation of the setting ring (9) with respect to the clamping ring (8) one of the two rings (8, 9) has at least one flat surface (93) which is parallel to the axis and in opposite relation to which are provided on the other ring two respective abutment surfaces (91, 92) which are parallel to the axis and which are inclined relative to each other and which by virtue of their mutual inclined positioning define the angle through which the setting ring (9) is rotatable at a maximum with respect to the clamping ring (8).

5. A drilling chuck according to one of claims 1 to 3 characterised in that to provide the abutments (16', 16") which limit the rotation of the setting ring (9) with respect to the clamping ring (8) there is provided at least one abutment portion (29) on one of the two rings (8, 9) and a recess (30) for receiving the abutment portion (29) on the other ring, wherein the abutment portion (29) comes into abutment at the ends of the rotational travel with a respective one of the two end faces defining the recess (30) in the peripheral direction.

6. A drilling chuck according to claim 5 characterised in that the abutment portion (29) is in the form of a wall portion of the intermediate ring (18) which projects from the axially front edge of the intermediate ring (18) axially forwardly into the recess (30) on the inside of the wall of the setting ring (9).

7. A drilling chuck according to claim 5 characterised in that the abutment portion (29) is in the form of a radially inwardly directed projection at the inside of the wall of the setting ring (9) and the recess (30) is in the form of a window in an axially forwardly approximately conically tapering collar (66) of the intermediate ring (18).

8. A drilling chuck according to one of claims 1 to 7 characterised in that the spring loop (38) forms a spring arm (36) which extends in the peripheral direction and which has the locking member (12) at the free end of the arm, wherein in the engaged condition of the locking member (12) the spring arm (36) bears against the control projection (35) at a spacing from the locking member (12), which permits the spring arm (35) at the location of the locking member (12) to flex by the depth of engagement of the locking member into the locking recesses (10).

9. A drilling chuck according to claim 8 characterised in that provided on the spring loop (38) are two projections (38', 38") which are disposed at a mutual spacing in the peripheral direction and of which the projection (38') at the locking member side forms the support for the spring arm (36) against the control cam (35) and the other projection (38") forms the detent member of the detent device (17).

10. A drilling chuck according to claim 9 characterised in that the spring loop (38) is formed by a spring band and the locking member (12) is formed directly by the rearward end of the spring band, viewed in the direction of rotation of the clamping ring (8), which corresponds to closing of the drilling chuck.

11. A drilling chuck according to claim 10 characterised in that the projections (38', 38") are in the form of outward curve configurations on the spring band.

12. A drilling chuck according to claim 10 or claim 11 characterised in that the spring loop (38) is arranged in a slot (94) extending in the peripheral direction between the clamping ring (8) and the setting ring (9) and is prevented from rotating in positively locking relationship on the clamping ring (8), that the annular wall of the clamping ring (8) is provided with a window (77) for the locking member (12) to pass through into the locking recesses (10), and that the slot (94) at least in the region of the detent member (38") has an enlargement (95) which permits the detent displacements of the detent member.

13. A drilling chuck according to claim 12 characterised in that the spring loop (38) is disposed in the slot (94) with the spring band surface oriented in parallel relationship with the axis (3) of the chuck and the locking recesses (10) extend axially on a circular-cylindrical peripheral surface (96) at the chuck body side.

14. A drilling chuck according to claim 12 characterised in that the spring loop (38) is disposed in the slot (94) with the spring band surface oriented in radial relationship with the axis (3) of the chuck and the locking recesses (10) extend radially on an annular surface (74) which is at the chuck body side and which is perpendicular to the axis (3) of the chuck.

15. A drilling chuck according to claim 14 characterised in that, in the case of a clamping ring (8) with an intermediate ring (18), the wall of the latter forms a radially directed annular disc (76) which is disposed axially between the annular surface (74) having the locking recesses (10) and a radial annular shoulder (75) of the setting ring (9), wherein the slot (94) which accommodates the spring loop (38) is disposed between the annular disc (76) and the annular shoulder (75) and the control cam (35) as well as the detent receiving means (17") are provided on the annular shoulder (75), and the window (77) for the passage of the locking member (12) and the slot enlargement (95) for the detent member (38") are provided on the annular disc (76).

16. A drilling chuck according to claim 15 characterised in that the intermediate ring (18) passes with its abutment portions (29) through the spring loop (38) in openings whose edges (78) bear in the peripheral direction against the abutment portions (29).

17. A drilling chuck according to claim 10 or claim 11 characterised in that, in the case of a clamping ring (8) with an intermediate ring (18), the spring loop (38) which is oriented with its spring band surface in parallel relationship with the axis (3) of the chuck is disposed in an annular slot (83) extending in the peripheral direction between the chuck body (1) and the intermediate ring (18), the annular slot being delimited at the chuck body side by the ring of the axially extending locking recesses (10), and that the spring loop (38) bears with an outwardly directed bias against the intermediate ring (18) and engages outwardly with its two projections (38', 38") through the intermediate ring (18) in windows (39', 39") in which the spring loop (38) is non-rotatably held fast.

18. A drilling chuck according to claim 17 characterised in that the annular slot (83) is radially wider than the spring loop (38) is thick, that the spring loop (38) is supported radially outwardly at the intermediate ring (18) with an apex region (31) disposed approximately centrally between the two projections (38', 38") and between said apex region (31) and the two projections (38', 38") forms a respective spring limb (34) for tangentially bearing against the ring of the locking recesses (10).

19. A drilling chuck according to claim 18 characterised in that the projection (38") forming the detent member, at its side remote from the apex region (31) of the spring loop (38), carries a spring leg (71) which tangentially bears under bias against the ring of the locking recesses (10).

20. A drilling chuck according to one of claims 17 to 19 characterised in that in the apex region (31) between its two projections (38', 38") the spring loop (38) has a third projection (38"') which engages outwardly through the intermediate ring (18) in a further window (39"'), the projection engaging into a groove (70) which is provided on the inside of the wall of the setting ring (9) and which extends in the peripheral direction at least over the maximum possible rotational travel of the setting ring (9) with respect to the clamping ring (8) and forms with at least one of its side walls an axial support for the projection (38"') whereby the setting ring (9) is prevented from axial displacement on the clamping ring (8).

21. A drilling chuck according to one of claims 17 to 20 characterised in that at a location which is disposed in the peripheral direction between the projections (38', 38") and opposite the spring loop (38) the intermediate ring (18) has a spring clasp (72) which is independent of the spring loop and which engages radially outwardly into a groove (73) which is provided on the inside of the wall of the setting ring (9) and which extends in the peripheral direction at least over the maximum possible rotational travel of the setting ring (9) with respect to the clamping ring (8) and forms with at least one of its side walls an axial support for the spring clasp (72) by which the setting ring (9) is prevented from axial displacement on the clamping ring (8).

## Revendications

1. Mandrin porte-foret, en particulier pour le perçage à percussion, comprenant un corps de mandrin (1) qui peut être fixé à une broche de perçage, des mors de serrage (5) qui définissent entre eux un logement (4) pour l'outil de perçage et qui, pour ouvrir et fermer le mandrin de perçage, peuvent être déplacés au moyen d'une bague de serrage (8) guidée en rotation sur le corps de mandrin (1), mais fixe dans la direction axiale, un dispositif de verrouillage (11) pour la bague de serrage (8) comportant une couronne coaxiale de cavités de verrouillage (10) et au moins un organe de verrouillage (12) qui est poussé dans les cavités de verrouillage (10) par la force d'un ressort de verrouillage, l'organe de verrouillage (12) et les cavités de verrouillage (10) étant en contact réciproque par des surfaces de flancs (13', 13") inclinées, de manière telle qu'elles empêchent la rotation de la bague de serrage (8) dans la direction de rotation correspondant à l'ouverture du mandrin porte-foret et permettent, lors de la rotation de la bague de serrage (8) dans la direction opposée, c'est-à-dire dans la direction de rotation correspondant à la fermeture du mandrin porte-foret, à l'organe de verrouillage (12) de sortir des cavités de verrouillage (10) à l'encontre de la force du ressort de verrouillage et ainsi de glisser de cavité de verrouillage en cavité de verrouillage, une bague de commande (9) coaxiale qui peut tourner de manière limitée entre des butées (16', 16") et dont la rotation permet d'amener l'organe de verrouillage (12) de l'état enclenché dans les cavités de verrouillage (10) dans un état dégagé des cavités de verrouillage (10) et un dispositif d'encliquetage (17) qui forme, dans la direction périphérique, deux positions d'encliquetage pour la bague de commande (9), l'organe de verrouillage (12), dans l'une des positions d'encliquetage, se trouvant dans l'état enclenché dans les cavités de verrouillage (10) et, dans l'autre position d'encliquetage, se trouvant dans l'état dégagé desdites cavités de verrouillage, les positions d'encliquetage étant formées par la pénétration d'un élément d'encliquetage (38") sollicité par un ressort dans des cavités d'encliquetage (17") disposées en conséquence, caractérisé en ce que les butées (16', 16") pour la bague de commande (98) limitent la rotation de cette dernière dans les deux directions par rapport à la bague de serrage (8), en ce que la couronne des cavités de verrouillage (10) est disposée sur le corps de mandrin (1) et l'organe de verrouillage (12) est disposé sur la bague de serrage (8) et qu'une came de commande (35) est aménagée sur la bague de commande (9) pour commander l'organe de verrouillage (12), l'organe de verrouillage (12) passant de l'état dégagé à l'état enclenché et inversement lorsqu'on tourne la bague de commande (9) par rapport à la bague de serrage (8), dans la direction correspondant à la fermeture du mandrin, en ce que l'élément d'encliquetage (38") est disposé sur la bague de serrage (8) et les cavités d'encliquetage (17") sont disposées sur la bague de commande (9) et en ce que le ressort de verrouillage et le ressort d'encliqetage sont formés d'un étrier à ressort (38) commun, qui s'étend dans la direction périphérique, le long de la bague de serrage (8), et est solidaire en rotation de celle-ci.

2. Mandrin de perçage selon la revendication 1, caractérisé en ce que, la bague de serrage (8), les mors de serrage (5) étant guidés dans le corps de mandrin (1), est pourvue d'un filetage de serrage (7') qui est en prise avec une denture (6) prévue sur les mors de serrage (5), et comporte une bague intermédiaire (18) coaxiale qui porte les éléments côté bague de serrage des butées (16', 16") ainsi que l'étrier à ressort (38) et qui présente une partie formant collet (18') qui entoure, de manière fixe en rotation, la partie de la bague de serrage (8) portant le filetage de serrage (7').

3. Mandrin de perçage selon la revendication 2, caractérisé en ce que la partie de la bague de serrage (8) portant le filetage de serrage (7') est formée de deux demi-bagues qui sont maintenues sur le corps de mandrin (1) par la partie formant collet (18') de la bague intermédiaire (18).

4. Mandrin de perçage selon une des revendications 1 à 3, caractérisé en ce que pour former les butées (16', 16") limitant la rotation de la bague de commande (9) par rapport à la bague de serrage (8), l'une des deux bagues (8, 9) comporte au moins une surface plane (93), parallèle à l'axe, en vis-à-vis de laquelle sont prévues, sur l'autre bague, deux surfaces de butée (91, 92) parallèles à l'axe et inclinées l'une par rapport à l'autre, qui, par leur inclinaison réciproque, définissent l'angle maximal de rotation de la bague de commande (9) par rapport à la bague de serrage (8).

5. Mandrin de perçage selon une des revendications 1 à 3, caractérisé en ce que pour former les butées (16', 16") limitant la rotation de la bague de commande (9) par rapport à la bague de serrage (8), il est prévu au moins une pièce de butée (29) sur l'une des deux bagues (8, 9) et un évidement (30) recevant la pièce de butée (29) dans l'autre bague, la pièce de butée (29), aux extrémités de la course de rotation, venant en butée sur l'une des deux surfaces frontales qui délimitent l'évidement dans la direction périphérique.

6. Mandrin de perçage selon la revendication 5, caractérisé en ce que la pièce de butée (29) est conformée en partie de paroi de la bague intermédiaire (18) qui à partir du bord avant vu dans la direction axiale fait saillie axialement vers l'avant dans l'évidement (30) prévu dans la paroi intérieure de la bague de commande (9).

7. Mandrin de perçage selon la revendication 5, caractérisé en ce que la pièce de butée (29) est conformée en came dirigée radialement vers l'intérieur sur la paroi de la bague de commande (9) et l'évidement (30) est conformé en fenêtre aménagée dans un collet (66) de la bague intermédiaire (18), qui se rétrécit sensiblement en forme de cône axialement vers l'avant.

8. Mandrin de perçage selon une des revendications 1 à 7, caractérisé en ce que l'étrier à ressort (38) forme un bras de ressort (36) qui s'étend dans la direction périphérique et porte à son extrémité libre l'organe de verrouillage (12), le bras de ressort (36), lorsque l'organe de verrouillage (12) est enclenché, reposant sur la came de commande (35) à une certaine distance de l'organe de verrouillage (12), qui permet la flexion du bras de ressort (36) au niveau de l'organe de verrouillage (12), de la valeur de sa profondeur de pénétration dans l'évidement de verrouillage (10).

9. Mandrin de perçage selon la revendication 8, caractérisé en ce qu'il est prévu sur l'étrier à ressort (38) deux saillies (38', 38") qui sont situées à distance l'une de l'autre dans la direction périphérique, parmi lesquelles la saillie (38') côté organe de verrouillage forme la surface d'appui du bras de ressort (36) sur la came de commande (35) et l'autre saillie (38") forme l'élément d'encliquetage du dispositif d'encliquetage (17).

10. Mandrin de perçage selon la revendication 9, caractérisé en ce que l'étrier à ressort (38) est formé d'une lame à ressort et l'organe de verrouillage (12) est formé directement par l'extrémité arrière de la lame à ressort, vu dans la direction de rotation de la bague de serrage (8) qui correspond à la fermeture du mandrin de perçage.

11. Mandrin de perçage selon la revendication 10, caractérisé en ce que les saillies (38', 38") sont des renflements sur la lame à ressort obtenus par pliage.

12. Mandrin de perçage selon la revendication 10 ou 11, caractérisé en ce que l'étrier à ressort (38) est disposé dans une fente (94) qui s'étend dans la direction périphérique entre la bague de serrage (8) et la bague de commande (9) et est immobilisé en rotation par obstacle sur la bague de serrage (8), en ce que la paroi annulaire de la bague de serrage (8) est pourvue d'une fenêtre (77) pour le passage de l'organe de verrouillage (12) dans les évidements de verrouillage (10) et en ce que la fente (94), au moins dans la région de l'élément d'encliquetage (38") est pourvu d'un élargissement (95) permettant les déplacements d'encliquetage de l'élément d'encliquetage.

13. Mandrin de perçage selon la revendication 12, caractérisé en ce que l'étrier à ressort (38) est disposé dans la fente (94) avec la surface de la lame à ressort orientée parallèlement à l'axe de mandrin (3) et les évidements de verrouillage (10) s'étendent axialement sur une surface périphérique (96) cylindrique de révolution côté corps de mandrin.

14. Mandrin de perçage selon la revendication 12, caractérisé en ce que l'étrier à ressort (38) est disposé dans la fente (94) avec la surface de la lame à ressort orientée radialement par rapport à l'axe de mandrin (3) et les évidements de verrouillage (10) s'étendent radialement sur une surface annulaire (74) côté corps de mandrin perpendiculaire à l'axe de mandrin.

15. Mandrin de perçage selon la revendication 14, caractérisé en ce que dans le cas d'une bague de serrage (8) comportant une bague intermédiaire (18), la paroi de cette dernière forme une plaque annulaire (76) orientée radialement, qui, vu dans la direction axiale, est disposée entre la surface annulaire (74) comportant les évidements de verrouillage (10) et un épaulement annulaire (75) radial, la fente (94) qui reçoit l'étrier à ressort (38) étant située entre la plaque annulaire (76) et l'épaulement annulaire (75) et la came de commande (35) et le cavité d'encliquetage (17") étant aménagés dans l'épaulement annulaire (75), la fenêtre (77) pour le passage de l'organe de verrouillage (12) et l'élargissement de la fente (95) pour l'élément d'encliquetage (38") étant aménagés sur la plaque annulaire (76).

16. Mandrin de perçage selon la revendication 15, caractérisé en ce que la bague intermédiaire (18) avec ses pièces de butée (29) s'engage dans des ouvertures de l'étrier à ressort (38), dont les bords (78), dans la direction périphérique, sont en contact avec les pièces de butée (29).

17. Mandrin de perçage selon la revendication 10 ou 11, caractérisé en ce que, dans le cas d'une bague de serrage (8) comportant une bague intermédiaire (18), l'étrier à ressort (38) dont la surface de lame de ressort est disposée parallèlement à l'axe de mandrin (3) est monté dans un espace annulaire (83) aménagé dans la direction périphérique, entre le corps de mandrin (1) et la bague intermédiaire (18), lequel espace annulaire, côté corps de mandrin, est délimité par la couronne d'évidements de verrouillage orientée axialement et en ce que l'étrier à ressort (38) est en appui sur la bague intermédiaire (18) avec une précontrainte en direction de l'extérieur et, avec ses deux saillies (38', 38"), traverse en direction de l'extérieur la bague intermédiaire (18) par des fenêtres (39'; 39") dans lesquelles l'étrier à ressort (38) est immobilisé en rotation.

18. Mandrin de perçage selon la revendication 17, caractérisé en ce que dans l'espace annulaire (83), dans la direction radiale a une largeur supérieure à l'épaisseur de l'étrier à ressort (38), en ce que l'étrier à ressort (38) pend appui par une arête (31) disposée sensiblement au centre entre les deux saillies (38', 38") sur la partie radialement extérieure de la bague intermédiaire (18) et forme chaque fois, entre cette arête (31) et les deux saillies (38', 38"), une barrette à ressort (34) venant en appui tangentiellement sur la couronne d'évidements de verrouillage (10).

19. Mandrin de perçage selon la revendication 18, caractérisé en ce que la saillie (38") qui forme l'élément d'encliquetage, de son côté éloigné de l'arête (31) de l'étrier à ressort (38) porte une branche de ressort (71) qui est en appui tangentiel avec précontrainte sur la couronne d'évidements de verrouillage (10).

20. Mandrin de perçage selon une des revendications 17 à 19, caractérisé en ce que l'étrier à ressort (38), dans la région de l'arête (31) prévue entre ses deux saillies (38', 38"), comporte une troisième saillie (38"') qui traverse la bague intermédiaire (18) en direction de l'extérieur dans une fenêtre supplémentaire (39"') et qui s'engage dans une gorge (70) aménagée dans la paroi intérieure de la bague de commande (9), laquelle rainure, dans la direction périphérique, s'étend sur la course de rotation maximale possible de la bague de commande (9) par rapport à la bague de serrage (8) et forme avec au moins une de ses parois latérales une butée axiale pour la saillie (38"'), la bague de commande (9) étant ainsi tenue axialement sur la bague de serrage (8).

21. Mandrin de perçage selon une des revendications 17 à 20, caractérisé en ce que la bague intermédiaire (18), en un point qui, dans la direction périphérique, est situé entre les saillies (38', 38") et en vis -à-vis de l'étrier à ressort (38), comporte une agrafe élastique (72) indépendante de l'étrier à ressort, qui radialement vers l'extérieur, s'engage dans une gorge (73) aménagée dans la paroi intérieure de la bague de commande (9), gorge qui dans la direction périphérique, s'étend au moins sur la course de rotation maximale possible de la bague de commande (9) par rapport à la bague de serrage (8) et forme avec au moins une de ses parois latérales une butée axiale pour l'agrafe élastique (72), grâce à laquelle la bague de commande (9) est tenue axialement sur la bague de serrage (8).
